(19)

Europäisches Patentamt
European Patent Office
Office européen des brevets

(11) **EP 3 490 177 A1**

(12) **EUROPEAN PATENT APPLICATION**
published in accordance with Art. 153(4) EPC

(43) Date of publication:
**29.05.2019 Bulletin 2019/22**

(21) Application number: **17830372.3**

(22) Date of filing: **06.07.2017**

(51) Int Cl.:
**H04L 1/00** $^{(2006.01)}$

(86) International application number:
**PCT/CN2017/092067**

(87) International publication number:
**WO 2018/014738 (25.01.2018 Gazette 2018/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.07.2016 CN 201610587517**
　　　　　　**22.07.2016 CN 201610584674**

(71) Applicant: **Shenzhen Super Data Link Technology Ltd.**
**Shenzhen, Guangdong 518000 (CN)**

(72) Inventors:
- **LIU, Ruopeng**
  **Shenzhen**
  **Guangdong 518057 (CN)**
- **JI, Chunlin**
  **Shenzhen**
  **Guangdong 518057 (CN)**
- **XU, Xingan**
  **Shenzhen**
  **Guangdong 518057 (CN)**
- **LIU, Zihong**
  **Shenzhen**
  **Guangdong 518057 (CN)**
- **ZHANG, Shasha**
  **Shenzhen**
  **Guangdong 518057 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **FAST DECODING METHOD AND DEVICE SUITABLE FOR OVXDM SYSTEM, AND OVXDM SYSTEM**

(57)　This application discloses a fast decoding method and device suitable for an OvXDM system, and an OvXDM system. According to this method, there is no need to traverse all state nodes and expanded paths of the state nodes in a decoding process, and only some state nodes and paths are selected through measure sorting for expansion. Therefore, the decoding complexity can be greatly reduced and decoding efficiency is improved. The decoding complexity does not increase drastically as a number K of times of overlapped multiplexing increases, as in a conventional decoding solution. This resolves the problem that the spectral efficiency conflicts with the decoding complexity and the decoding efficiency.

Separately calculate measures between all potential paths of first r symbols and first r received symbols in a received symbol sequence — S01

Sort the measures — S03

Store smaller Rn measures and corresponding paths — S05

Expand each path — S07

Calculate transient measures — S09

Add to a cumulative measure corresponding to a path at a previous moment, to obtain a cumulative measure at the current moment after the addition — S11

Sort the cumulative measures — S13

Store the smaller Rn measures and corresponding paths — S15

Repeat steps S07 to S15, until the last node corresponding to the received symbol is expanded — S17

Select the path having the smallest measure as a decoding path — S19

FIG. 1

EP 3 490 177 A1

**Description**

**TECHNICAL FIELD**

The present invention relates to the signal processing field, and in particular, to a fast decoding method and device suitable for an OvXDM system, and an OvXDM system.

**BACKGROUND**

In conventional decoding in an overlapped multiplexing system - regardless whether it is an overlapped time division multiplexing (OvTDM, Overlapped Time Division Multiplexing) system, an overlapped frequency division multiplexing (OvFDM, Overlapped Frequency Division Multiplexing) system, an overlapped code division multiplexing (OvCDM, Overlapped Code Division Multiplexing) system, an overlapped space division multiplexing (OvSDM, Overlapped Space Division Multiplexing) system, or a overlapped hybrid division multiplexing (OvHDM, Overlapped Hybrid Division Multiplexing) system, a node in a trellis (Trellis) needs to be accessed constantly, and two storages need to be set for each node, where one storage is used to store a relatively optimal path for getting to the node, and the other storage is used to store a measure corresponding to the relatively optimal path of the node.

For the OvTDM system and the OvFDM system, each node in the trellis needs to be expanded in a decoding process. Therefore, a quantity of nodes determines the decoding complexity. For a system in which a number of times of overlapping is K and a modulation dimension is M (where M is an integer greater than or equal to 2), a quantity of nodes in a stable state in a trellis corresponding to the system is MK-1. Therefore, the decoding complexity increases exponentially as the number K of times of overlapping increases. However, in the OvTDM system and the OvFDM system, spectral efficiency of the system is 2K/symbol. Therefore, the spectral efficiency increases as the number K of times of overlapping increases. Therefore, on the one hand, in order to improve the spectral efficiency, a greater number K of times of overlapping is preferred; and on the other end, in order to reduce decoding complexity, a smaller number K of times of overlapping is preferred. Particularly, when the number K of times of overlapping is increased to a specific value, for example, when K is greater than 8, the decoding complexity increases drastically. The existing decoding method cannot meet the requirement of real-time decoding, and the spectral efficiency conflicts with the decoding complexity and the decoding efficiency.

Similarly, for an M-dimensionally modulated OvCDM system with an encoding tributary quantity of K', a quantity of nodes in a stable state in a trellis corresponding to the system is $M^{K'-1}$. Therefore, the decoding complexity increases exponentially as the tributary quantity K' increases. However, in the OvCDM system, the encoding tributary quantity K' needs to be as great as possible so that a higher spectral efficiency is achieved, but the decoding complexity increases drastically as K' increases. Therefore, the spectral efficiency conflicts with the decoding complexity and the decoding efficiency.

**SUMMARY**

This application provides a fast decoding method and device suitable for an OvXDM system, and an OvXDM system. The decoding complexity does not increase drastically as K/K' increases, as in a conventional decoding solution. This resolves the problem that the spectral efficiency conflicts with the decoding complexity and the decoding efficiency.

According to a first aspect of this application, this application provides a fast decoding method suitable for an OvXDM system, including the following steps:

step 1. separately calculating measures between all potential paths of first r symbols and first r received symbols in a received symbol sequence;

step 2. sorting the calculated measures, and storing the smaller Rn measures and paths respectively corresponding to the $R_n$ measures;

step 3. performing M-dimensional expansion on the last node of each path currently stored, calculating a transient measure between the expanded path and a corresponding received symbol in a received symbol sequence, and adding each transient measure to a cumulative measure corresponding to a previous moment of the transient measure, to obtain a cumulative measure of each path at the current moment after the addition;

step 4. sorting the cumulative measures of the paths after the addition, and storing the smaller Rn cumulative measures and paths respectively corresponding to the $R_n$ measures;

step 5. when a node corresponding to the last symbol in the received symbol sequence is expanded in step 3, and correspondingly, in step 4, the smaller Rn measures corresponding to the whole received symbol sequence and paths respectively corresponding to the $R_n$ measures are stored, the operation ends; otherwise, step 3 and step 4 are repeated; and

step 6. selecting the path having the smallest measure as a decoding path, to perform determining and outputting, where

$R_n$ is a positive integer, is preset as required, and is less than a quantity of nodes in a trellis corresponding to the OvXDM system.

According to a second aspect of this application, this application provides a fast decoding device suitable for an OvXDM system, including:

a first calculation module, configured to separately calculate measures between all potential paths of first r symbols and first r received symbols;

a first sorting module, configured to sort the calculated measures;

$R_n$ distance storages and $R_n$ corresponding path storages, respectively configured to store smaller Rn measures obtained by the first sorting module and paths respectively corresponding to the $R_n$ measures;

an expansion module, configured to perform M-dimensional expansion on the last node of each path currently stored;

a second calculation module, configured to calculate a transient measure between the expanded path and a corresponding received symbol in a received symbol sequence, and add each transient measure to a cumulative measure corresponding to a previous moment of the transient measure, to obtain a cumulative measure of each path at the current moment after the addition;

a second sorting module, configured to sort the cumulative measures of the paths after the addition obtained by the second calculation module, where the smaller $R_n$ measures and paths respectively corresponding to the $R_n$ measures are used to update the values stored in the $R_n$ distance storages and the $R_n$ corresponding path storages; and the expansion module, the second calculation module, and the second sorting module work repeatedly and stop until the expansion module expands the node corresponding to the last symbol in the received symbol sequence so that the $R_n$ distance storages and the $R_n$ corresponding path storages respectively store the smaller $R_n$ measures corresponding to the whole received symbol sequence and paths respectively corresponding to the $R_n$ measures; and a determining and outputting module, configured to select, as a decoding path, a path stored in a path storage corresponding to a distance storage that stores the smallest measure, to perform determining and outputting, where $R_n$ is a positive integer, is preset as required, and is less than a quantity of nodes in a trellis corresponding to the OvXDM system.

According to a third aspect of this application, a fast decoding method for an OvXDM system, including the following steps:

step 1. separately calculating measures between all potential paths of first r symbols and first r received symbols in a received symbol sequence;

step 2. sorting the calculated measures, and storing smaller $R_n$ measures of the measures and paths respectively corresponding to the $R_n$ measures;

step 3. expanding a path corresponding to the smallest measure currently stored, calculating a transient measure between the expanded path and a corresponding received symbol, and adding each transient measure to a cumulative measure corresponding to a previous moment, to obtain a cumulative measure of each expanded path at the current moment after the addition;

step 4. sorting the cumulative measures of the expanded paths and the other unexpanded $R_n$-1 measures that are stored, and storing smaller $R_n$ measures and paths respectively corresponding to the $R_n$ measures; and

step 5. when the path corresponding to the smallest measure currently stored reaches a depth of the received symbol sequence after expansion in step 3, calculating the transient measure between the expanded path and the corresponding received symbol, comparing the transient measures, and using a path corresponding to the smallest transient measure as a decoding path; otherwise, repeating step 3 and step 4, where

$R_n$ is a positive integer and is less than a quantity of nodes in a trellis corresponding to the OvXDM system.

According to a fourth aspect of the present invention, a fast decoding device for an OvXDM system is provided, including

a first calculation module, configured to separately calculate measures between all potential paths of first r symbols and first r received symbols in a received symbol sequence;

a first sorting module, configured to sort the calculated measures;

$R_n$ distance storages and $R_n$ corresponding path storages, respectively configured to store smaller $R_n$ measures obtained by the first sorting module and paths respectively corresponding to the $R_n$ measures;

an expansion module, configured to expand a path corresponding to the smallest measure currently stored;

a second calculation module, configured to calculate a transient measure between the path expanded by the expansion module and a corresponding received symbol, and adding each transient measure to a cumulative measure corresponding to a previous moment, to obtain a cumulative measure of each expanded path at the current moment after the addition; a second sorting module, configured to sort the cumulative measures that are of the expanded paths and that are calculated by the second calculation module and the other unexpanded $R_n$-1 measures that are stored, where the smaller $R_n$ measures and paths respectively corresponding to the $R_n$ measures are used to update the values in the $R_n$ distance storages and the $R_n$ corresponding path storages; and

a comparing and outputting module, where when the path corresponding to the smallest measure currently stored reaches the depth of the received symbol sequence after being expanded by the expansion module, the second calculation module calculates the transient measure between the path expanded by the expansion module and the corresponding received symbol, and the comparing and outputting module compares the transient measures and uses a path corresponding to the smallest transient measure as a decoding path; otherwise, the expansion module, the second calculation module, and the second sorting module work repeatedly, where

$R_n$ is a positive integer and is less than a quantity of nodes in a trellis corresponding to the OvXDM system.

The beneficial effects of this application are as follows:

By using the fast decoding method and device suitable for an OvXDM system, and the OvXDM system according to the foregoing embodiments, there is no need to traverse all state nodes and expanded paths of the state nodes in a decoding process, and only some state nodes and paths are selected through measure sorting for expansion. Therefore, the decoding complexity can be greatly reduced and decoding efficiency is improved.

## BRIEF DESCRIPTION OF DRAWINGS

FIG. 1 is a schematic flowchart of a fast decoding method suitable for an OvXDM system according to an embodiment of this application;

FIG. 2 is a schematic structural diagram of a fast decoding device suitable for an OvXDM system according to an embodiment of this application;

FIG. 3 is a schematic structural diagram of a transmit end of an OvFDM system according to a first embodiment of this application;

FIG. 4(a) and FIG. 4(b) are schematic structural diagrams of a receive end of an OvFDM system according to the first embodiment of this application;

FIG. 5 is a diagram of a code tree of the OvFDM system according to the first embodiment of this application;

FIG. 6 is a trellis of decoding in the OvFDM system according to the first embodiment of this application;

FIG. 7 is a schematic structural diagram of an expanded trellis of the OvFDM system according to the first embodiment of this application;

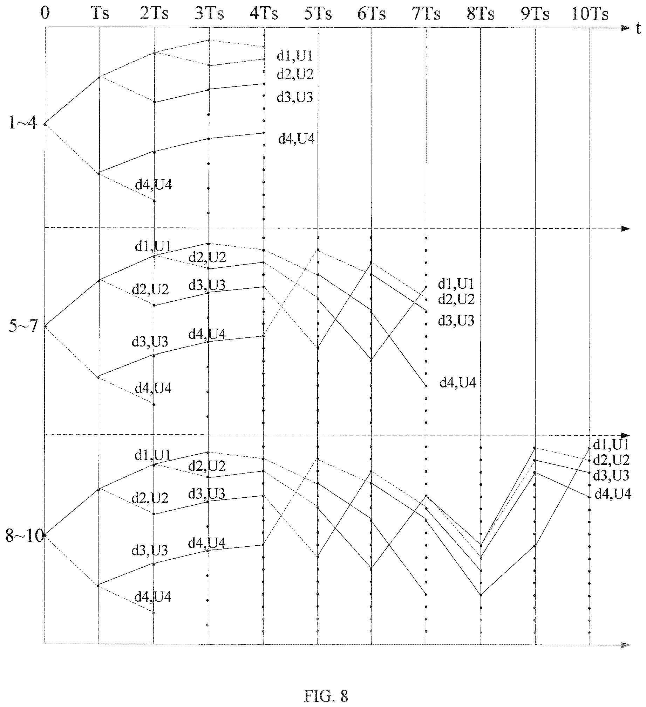

FIG. 8 is a schematic diagram of decoding of a fast decoding method suitable for an OvFDM system according to the first embodiment of this application;

FIG. 9 is a diagram of performance comparison between the fast decoding method suitable for an OvFDM system according to the first embodiment of this application and a conventional decoding method;

FIG. 10 is a diagram of decoding time comparison between the fast decoding method suitable for an OvFDM system according to the first embodiment of this application and a conventional decoding method;

FIG. 11 is a schematic structural diagram of a transmit end of an OvTDM system according to a second embodiment of this application;

FIG. 12(a) is a schematic diagram of a preprocessing unit of the OvTDM system according to the second embodiment of this application;

FIG. 12(b) is a schematic diagram of a sequence detection unit of the OvTDM system according to the second embodiment of this application;

FIG. 13 is a diagram of a code tree of the OvTDM system according to the second embodiment of this application;

FIG. 14 is a trellis of decoding in the OvTDM system according to the second embodiment of this application;

FIG. 15 is a schematic diagram of an expanded trellis of the OvTDM system according to the second embodiment of this application;

FIG. 16 is a schematic diagram of decoding of a fast decoding method suitable for an OvTDM system according to the second embodiment of this application;

FIG. 17 is a diagram of performance comparison between the fast decoding method suitable for an OvTDM system according to the second embodiment of this application and a conventional decoding method;

FIG. 18 is a diagram of decoding time comparison between the fast decoding method suitable for an OvTDM system according to the second embodiment of this application and a conventional decoding method;

FIG. 19 is a schematic structural diagram of an OvCDM system according to a third embodiment of this application;

FIG. 20 is a schematic structural diagram of an encoder of the OvCDM system according to the third embodiment of this application;

FIG. 21 is a schematic structural diagram of an encoding matrix of the OvCDM system according to the third embodiment of this application;

FIG. 22 is a schematic structural diagram of an encoder of the OvCDM system according to the third embodiment of this application;

FIG. 23 is a trellis of the OvCDM system according to the third embodiment of this application;

FIG. 24 is a schematic diagram of decoding of a fast decoding method suitable for an OvCDM system according to the third embodiment of this application; and

FIG. 25 is a schematic flowchart of another fast decoding method suitable for an OvXDM system.

## DESCRIPTION OF EMBODIMENTS

The following further describes this application in detail by using specific implementations with reference to the accompanying drawings.

In an OvXDM system, for example, an OvTDM system, an OvFDM system, and an OvCDM system, a conventional decoding solution generally uses a Viterbi (Viterbi) solution. A principle thereof is to fully expand all the nodes in a trellis corresponding to the system, calculate a measure of each path, and finally select a path having the smallest measure as a decoding path. It can be learned from the principle of the Viterbi decoding solution that the decoding complexity increases exponentially along with a number of times of overlapping/an encoding tributary quantity.

In this application, there is no need to traverse all state nodes and expanded paths of the state nodes in a decoding process, and only some state nodes and paths are selected through measure sorting for expansion. Therefore, the decoding complexity can be greatly reduced and decoding efficiency is improved. The following describes in detail.

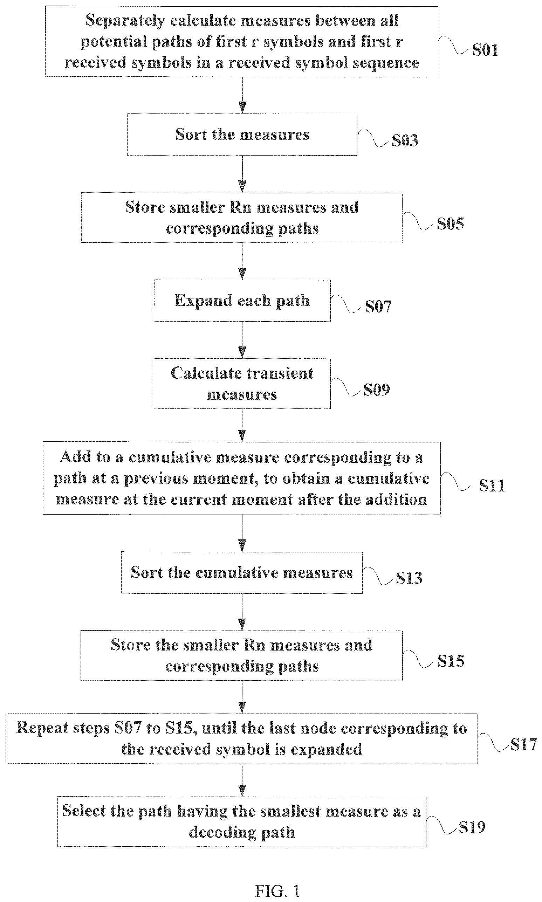

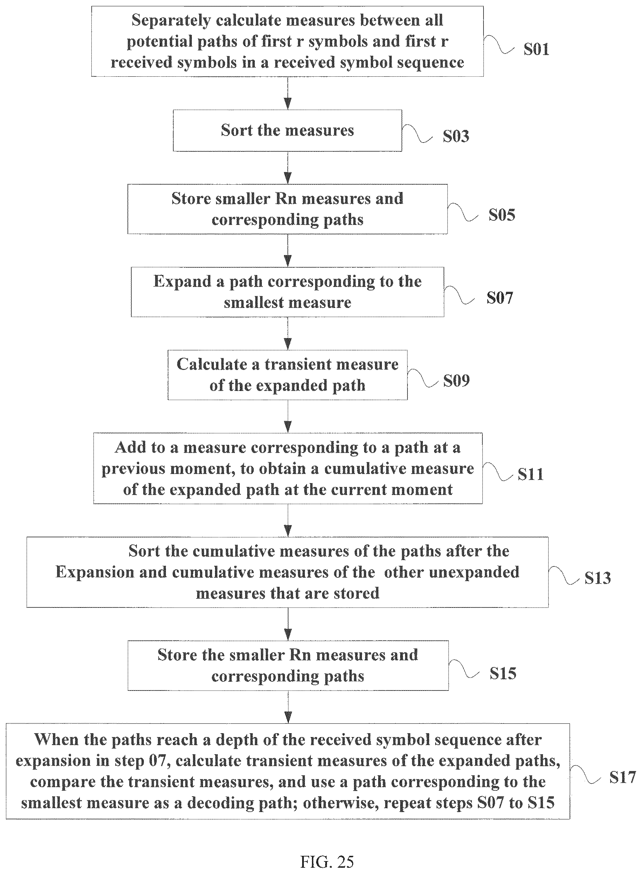

This application discloses a fast decoding method suitable for an OvXDM system. As shown in FIG. 1 and FIG. 25, the method includes steps S01 to S19.

Step S01. Separately calculate measures between all potential paths of first r symbols and first r received symbols in a received symbol sequence. For an M-dimensionally modulated OvTDM system, OvFDM system, and the like, a quantity of all the potential paths of the first r symbols is $M^r$, where M is an integer greater than or equal to 2. In this application, a measure represents a distance between two signals and is defined as $d = \sqrt[p]{|y_i - x_i|^p}, 0 < p < \infty$. When p = 2, the distance is a Euclidean distance. The Euclidean distance is an actual distance between two signals and can actually reflect a distance between an actual signal and an ideal signal. In this application, the Euclidean distance is defined as $d = \sqrt{\sum_i^N (y_i - x_i)^2}$.

Step S03. Sort the measures calculated in step S01.

Step S05. Store smaller $R_n$ measures of the measures sorted in step S03 and paths respectively corresponding to the $R_n$ measures.

Step S07. As shown in FIG. 1, expand the last node of each path currently stored. For an M-dimensionally modulated OvTDM system, OvFDM system, and the like, M-dimensional expansion is performed on the last node of each path currently stored.

Alternatively, as shown in FIG. 25, in this step, only a path corresponding to the smallest measure currently store is expanded.

Step S09. Calculate transient measures between the expanded paths and corresponding received symbols in the received symbol sequence.

Step S11. In an embodiment, as shown in FIG. 1, add each transient measure calculated in step S09 to a cumulative measure corresponding to a previous moment of the transient measure, to obtain a cumulative measure of each path at the current moment after the addition. In another preferable embodiment, as shown in FIG. 25, when each transient measure is added to the cumulative measure corresponding to the previous moment, the cumulative measure corresponding to the previous moment is first multiplied by a weight factor and then added to the transient measure. This is to gradually weaken reference to a measure of a node that is relatively far away from the current node as a path depth increases, to achieve higher decoding accuracy. In a preferable embodiment, a value of the weight factor is greater than 0 and is less than or equal to 1.

Step S13. Sort the cumulative measures of the paths after the addition in step S11. Alternatively, while sorting, sort the other unexpanded $R_n$-1 measures that are stored.

Step S15. Store smaller $R_n$ measures and paths respectively corresponding to the $R_n$ measures.

Step 17. When a node corresponding to the last symbol in the received symbol sequence is expanded in step S07, and correspondingly, in step S15, the smaller $R_n$ measures corresponding to the whole received symbol sequence and paths respectively corresponding to the $R_n$ measures, the operation ends; otherwise, step S07 to step S15 are repeated.

Alternatively, when the path corresponding to the smallest measure currently stored reaches a depth of the received symbol sequence after expansion in step 07, step S19 is performed, to calculate transient measures between the expanded paths and the corresponding received symbols, compare the transient measures, and use a path corresponding to the smallest measure as a decoding path; otherwise, repeat steps S07 to S15.

Step S19. Select the path having the smallest measure as the decoding path, to perform determining and outputting.

In the foregoing decoding method, $R_n$ is a positive integer, is preset as required, and is less than a quantity of nodes in a trellis corresponding to the OvXDM system. In an M-dimensionally modulated OvTDM system and OvFDM system and the like with K times of overlapping, $R_n$ is less than $M^{K-1}$. In a preferable embodiment, r is obtained by rounding down a value of $\log_M R_n$.

In an embodiment, X may represent any domain, including a time domain T, a frequency domain F, a space S, a code domain C, a hybrid H, or the like. Correspondingly, the OvXDM system may be an OvTDM system, an OvFDM system, an OvCDM system, an OvSDM system, an OvHDM system, or the like.

As described above, there is no need to traverse all state nodes and expanded paths of the state nodes in a decoding process, and only some state nodes and paths are selected through measure sorting for expansion. Therefore, the decoding complexity can be greatly reduced and decoding efficiency is improved. In the foregoing process of the decoding method, $R_n$ nodes are selected each time for expansion. Therefore, in the decoding process, a quantity $R_n$ of retained paths determines information retained in the decoding process. For an OvTDM system and an OvFDM system, a quantity of discarded paths in each expansion is $M^K - R_n$. Therefore, correspondingly, the decoding complexity decreases as $R_n$ decreases. However, $R_n$ cannot be infinitely small because decoding performance losses increase as $R_n$ decreases and a higher signal-to-noise ratio is needed under a same bit error rate condition. Therefore, selection of $R_n$ is also very important. The selection of $R_n$ needs to ensure that a minimum decoding performance loss is achieved while the complexity is reduced. Experiments indicates that $R_n$ less than $M^{K-1}$ and greater than or equal to $M^{K-4}$ is usually selected, where K is the number of times of overlapping, and M represents an M-dimensional system (where M is an integer greater than or equal to 2). This greatly reduces the decoding complexity and also ensures the decoding performance. Similarly, for an OvCDM system with an encoding tributary quantity of K' and an encoding constraint length of L, a quantity of discarded paths in each expansion is $M^{LK'} - R_n$. Generally, $R_n$ less than $M^{L(K'-4)}$ and greater than or equal to $M^{L(K'-2)}$ is selected, to greatly reduce the decoding complexity while ensuring the decoding performance.

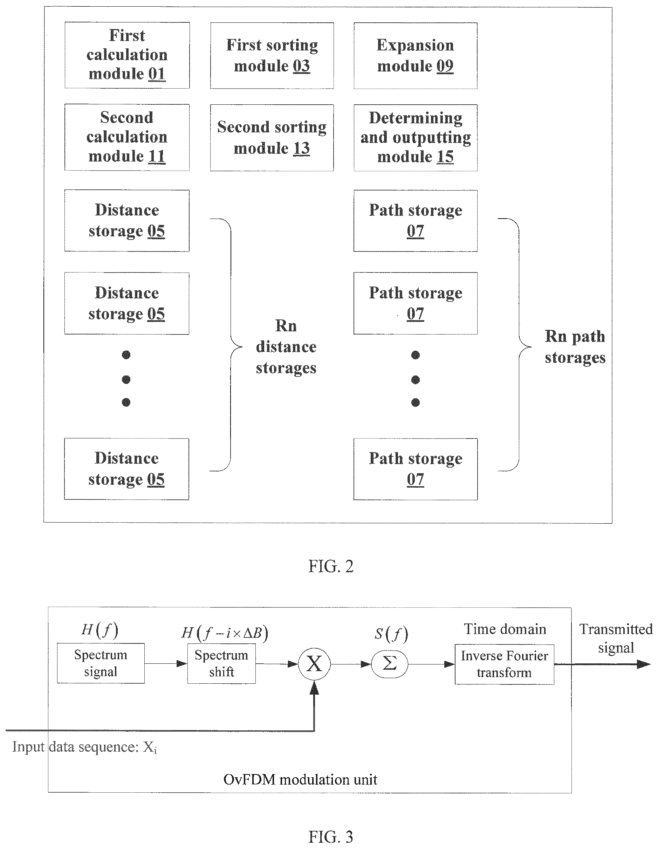

Correspondingly, this application further proposes a fast decoding device suitable for an OvXDM system. As shown in FIG. 2, the fast decoding device includes a first calculation module 01, a first sorting module 03, $R_n$ distance storages 05, $R_n$ path storages 07, an expansion module 09, a second calculation module 11, a second sorting module 13, and a determining and outputting module 15.

The first computing module 01 is configured to separately calculate measures between all potential paths of first r symbols and first r received symbols.

The first sorting module 03 is configured to sort the measures calculated by the first calculation module 01.

The $R_n$ distance storages 05 are configured to respectively store smaller $R_n$ measures obtained by the first sorting module, and the corresponding $R_n$ path storages 07 are configured to respectively store paths corresponding to the foregoing $R_n$ measures. In a preferable embodiment, $R_n$ is less than $M^{K-1}$, where M represents a dimension of the system and a value of M is an integer greater than or equal to 2.

The expansion module 09 is configured to perform M-dimensional expansion on the last node of each path currently stored, and alternatively, in some embodiments, expand only a path corresponding to a currently stored measure with the smallest value.

The second calculation module 11 is configured to calculate a transient measure between the expanded path and a corresponding received symbol in a received symbol sequence, and add each transient measure to a cumulative measure corresponding to a previous moment of the transient measure, to obtain a cumulative measure of each path at the current moment after the addition. In a preferable embodiment, a weight factor module 17 is configured to: when the second calculation module 11 adds each transient measure to the cumulative measure corresponding to the previous moment, first multiply the cumulative measure of the previous moment by a weight factor, so that the cumulative measure of the previous moment is first multiplied by the weight factor and then added to the transient measure. The weight factor module 17 is introduced to gradually weaken reference to a measure of a node that is relatively far away from the current node as a path depth increases, to achieve higher decoding accuracy. In a preferable embodiment, a value of the weight factor is greater than 0 and is less than or equal to 1.

The second sorting module 13 is configured to sort the cumulative measures of the paths after the addition by the second calculation module 11, where the smaller $R_n$ measures and paths respectively corresponding to the $R_n$

measures are used to update the values in the $R_n$ distance storages 05 and the $R_n$ corresponding path storages 07. The expansion module 09, the second calculation module 11, and the second sorting module 13 work repeatedly and stop until the expansion module 09 expands a node corresponding to the last symbol in the received symbol sequence so that the $R_n$ distance storages 05 and the $R_n$ corresponding path storages 07 respectively store the smaller $R_n$ measures corresponding to the whole received symbol sequence and paths respectively corresponding to the $R_n$ measures. Certainly, when the expansion module 09 expands only a path corresponding to a currently stored measure with the smallest value, the second calculation module 11 calculates the transient measure between the path expanded by the expansion module 09 and the corresponding received symbol, and the comparing and outputting module 15 compares the transient measures and uses a path corresponding to the smallest transient measure as a decoding path; otherwise, the expansion module 09, the second calculation module 11, and the second sorting module 13 work repeatedly.

The determining and outputting module 15 selects, as the decoding path, a path stored in a path storage 07 corresponding to a distance storage 05 that stores the smallest measure, to perform determining and outputting.

In the foregoing fast decoding device, $R_n$ is a positive integer, is preset as required, and is less than a quantity of nodes in a trellis corresponding to the OvXDM system. In an embodiment, r is obtained by rounding down a value of $\log_M R_n$, and M represents the dimension of the system and is an integer greater than or equal to 2.

In an embodiment, when the OvXDM system is an OvTDM system or an OvFDM system, $R_n$ is less than $M^{K-1}$ and is greater than or equal to $M^{K-4}$, where K is a number of times of overlapping of a received symbol, and M represents the dimension of the system and is an integer greater than or equal to 2; or when the OvXDM system is an OvCDM system, $R_n$ is less than $M^{L(K'-4)}$ and is greater than or equal to $M^{L(K'-2)}$, where K' is an encoding tributary quantity of the received symbol, L is an encoding constraint length of the received symbol, and M also represents the dimension of the system and is an integer greater than or equal to 2.

This application further discloses an OvXDM system, which includes the fast decoding device suitable for an OvXDM system described above. In an embodiment, the OvXDM system may be an OvTDM system, an OvFDM system, or an OvCDM, OvSDM, or OvHDM system.

The following further describes this application by using several embodiments.

**Embodiment 1**

This embodiment may use an OvFDM system as an example for description.

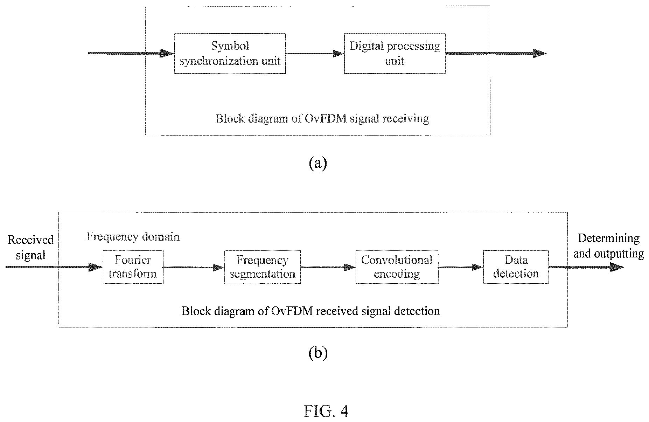

FIG. 3 shows a transmit end of the OvFDM system. First, frequency-domain signals are encoded according to a specific pattern, and then the frequency-domain signals are converted into time-domain signals, that is, inverse Fourier transform is performed. Then, the signals are sent. Specifically, an initial envelope waveform is first generated based on a design parameter; the initial envelope waveform is shifted in frequency domain according to a predetermined spectrum space, to obtain an envelope waveform of each subcarrier; input data sequences are respectively multiplied by corresponding subcarrier envelope waveforms, to obtain a modulated envelope waveform of each subcarrier; then the modulated envelope waveforms of the subcarriers are superimposed in frequency domain, to obtain a complex modulated envelope waveform in frequency domain; finally, the complex modulated envelope waveform in frequency domain is converted into a complex modulated envelope waveform in time domain for transmission. The frequency space is a subcarrier frequency space $\Delta B$, and the subcarrier frequency space $\Delta B = B/K$, where B is a bandwidth of the initial envelope waveform, and K is a number of times of overlapping. FIG. 4 shows a receive end of the OvFDM system. A signal received by the receive end by using an antenna is a time-domain signal. If the received signal needs to be decoded, the time-domain signal first needs to be converted into a frequency-domain signal, that is, Fourier transform is performed, so that the signal can be processed. Specifically, symbol synchronization in time domain is implemented for the received signal, and then a received signal in a time interval of each symbol is sampled and quantified, to convert the received signal into a digital signal sequence. The time-domain signal is converted into a frequency-domain signal, and then the frequency-domain signal is segmented by using the spectrum space $\Delta B$, to form segmented spectrums of the actually received signal. Then, a one-to-one correspondence between the received signal spectrum and a sent data symbol sequence is formed; and finally, the data symbol sequence is detected according to the one-to-one correspondence. In the OvFDM system, Fourier transform and inverse Fourier transform both involve setting of a quantity of sampling points. The quantities of sampling points in Fourier transform and inverse Fourier transform should be consistent and the value is $2^n$, where n is a positive integer.

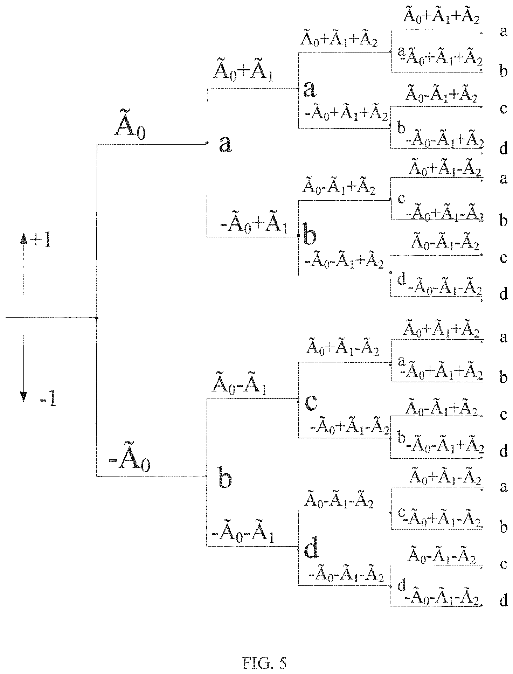

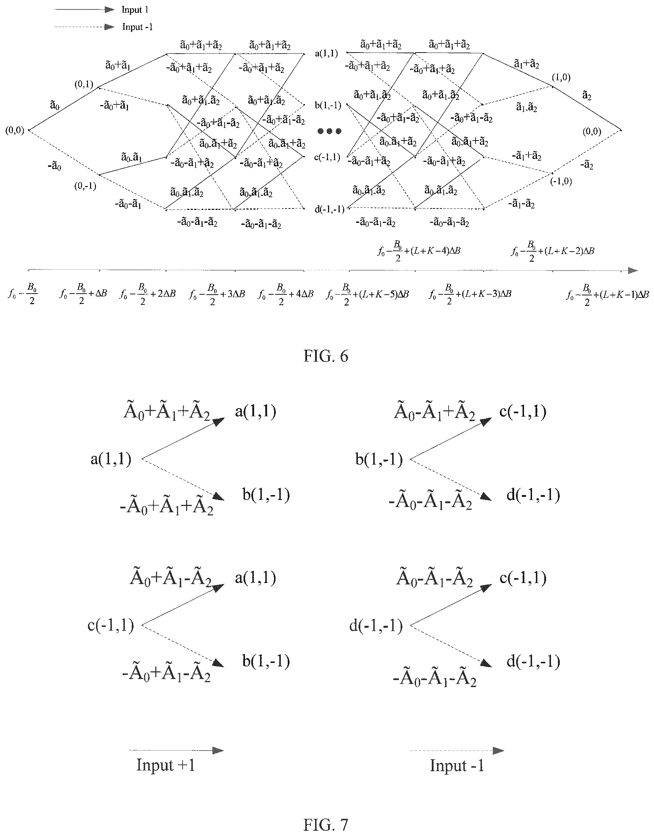

In a two-dimensionally modulated OvFDM system with K times of overlapping, that is, M = 2, a quantity of nodes in a trellis of the system is $2^{K-1}$. In a conventional decoding algorithm, $2^{K-1}$ distance storages are needed, and $2^{K-1}$ path storages are also needed. As shown in FIG. 5, FIG. 5 shows a diagram of a code tree corresponding to a system in which a received signal length N = 4 and the number of times of overlapping K = 3. It can be seen from the figure that in the diagram of the code tree, a state quantity is $2^{K-1} = 4$. Correspondingly, as shown in FIG. 6, a quantity of nodes in a corresponding trellis is also 4. When a decoding state is fully unfolded, each decoding step has a total of eight paths. In this embodiment, $R_n$ distance storages 05 are selected, and $R_n$ path storages 07 are also selected, where

$R_n$ is less than $2^{K-1}$, to reduce decoding complexity. In an embodiment, it is assumed that r is obtained by rounding down a value of $\log_2 R_n$. The following describes the decoding steps in detail.

(1) Determine paths of the first r symbols and corresponding measures.

A symbol sequence at a length of $r$ is represented as $\tilde{a}_0, \tilde{a}_1, ..., \tilde{a}_{r-1}$, In two-dimensional modulation, there are $2^r$ possible information combinations. A form of combination is $\pm\tilde{a}_0\pm\tilde{a}_1...\pm\tilde{a}_{r-1}$. Therefore, a matrix of $2^{r*r}$ dimensions is represented as $msg(2^{r*r})$, in which each row represents a symbol sequence at a length of r . Transient measures between the symbol sequences and the first $r$ received symbols are separately calculated, and defined as

$$d_{r,i} \; \Box \; \left\| \mathbf{v}_r - \sum_{k=0}^{r} \hat{u}_{i,r-k}\mathbf{x}_{r,k} \right\|^2 \;,\quad i = 0,1,2,...$$

, where Vr is the first $r$ received symbols, $\mathbf{x}_{r,k}$ is a window function of OvFDM, and $\hat{u}_{i,r-k}$ is the (r-k)$^{th}$ symbol in the i$^{th}$ row. In this case, when decoding hits the $r^{th}$ node, a corresponding transient measure is $d_{r,i}$, the corresponding 2r decoding paths are symbols in the i$^{th}$ row of $msg(2^{r*r})$, and the transient measures and the paths are respectively stored in the distance storages 05 and the path storages 07.

(2) Expand $2^r$ nodes, where two-dimensional expansion can be performed simultaneously on each node, that is, when an input is +1, upward expansion is performed, and when an input is -1, downward expansion is performed. As shown in FIG. 7, a transient measure of the expansion-hit node is calculated:

$$d_{r+1,i} \; \Box \; \left\| \mathbf{v}_{r+1} - \sum_{k=0}^{\min(r+1,R_n)} \hat{u}_{i,r+1-k}\mathbf{x}_{r+1,k} \right\|^2 \;,\quad n = 0,1,2,...$$

, and the transient measure is added to a cumulative measure of a previous moment of the path, to obtain measures of $2^{r+1}$ paths.

(3) Sort the measures of the $2^{r+1}$ paths, retain the first $R_n$ nodes having smaller path measures and paths of the $R_n$ nodes, and discard the remaining several nodes having greater measures.

(4) Continue to perform two-dimensional expansion on the $R_n$ nodes, calculate a transient measure of an expansion-hit node, and add the transient measure to a cumulative measure of a previous moment of the node. Regardless whether a trellis is completely unfolded, only the first $R_n$ hit nodes and path measures of the nodes are retained starting from the n$^{th}$ step, and paths with greater measures and distances of the paths are all discarded. Each time, $R_n$ remaining nodes are expanded, and so on, until the end of the data frames of the trellis.

It can be seen from the foregoing steps that by using the fast decoding method proposed in this application, only $R_n$ nodes need to be expanded each time, but in a conventional method, $2^{K-1}$ nodes need to be expanded. In an embodiment, when K is relatively large, a value of $R_n$ may be relatively small and meets $R_n<2^{K-1}$. Therefore, for a decoding sequence at a length of N, the decoding complexity is greatly reduced. It should be noted that in this embodiment, for ease of description, the fast decoding method of this application is described by using the two-dimensionally modulated system. Actually, this method is applicable to an M-dimensionally modulated system, where M may be an integer greater than or equal to 2.

The following uses an actual example to describe this embodiment.

A two-dimensionally modulated OvFDM system with a number of times of overlapping of K =5 is used as an example. The OvFDM system uses a rectangular multiplexing window H = {1 1 1 1 1} for modulation. It should be noted that the fast decoding method according to this application is applicable to various multiplexing window functions. Therefore, when a trellis is completely unfolded, there is a total of $2^{K-1}$=16 nodes. In this example, $R_n$=4. Therefore, r is obtained by rounding down a value of $\log_2 R_n$, that is, 2. It should be noted that in the fast decoding method according to this application, the decoding complexity can be reduced provided that the value of $R_n$ is less than $2^{K-1}$.

It is assumed that a transmitted code sequence is xi={+1 +1 -1 +1 -1 +1 +1 +1 -1 +1}, and a received sequence obtained through modulation in the OvFDM system is yi={+1 +2 +1 +2 +1 +1 +1 +3 +1 +3}.

As shown in FIG. 6, the used fast decoding method according to this application is as follows:

(1) Because r=2, first calculate sequence combinations that can be obtained by combining two symbols, where the calculated sequence combinations are separately U1={+1 +1}, U2={+1 -1}, U3={-1 +1}, and U4={-1 -1}. Separately calculate measures between the first two symbols {yi(1) yi(2)} of the received sequence and U1, U2, U3, and U4, to obtain d1, d2, d3, and d4. Store d1, d2, d3, and d4 in distance storages 05; and at the same time, store the paths U1, U2, U3, and U4 corresponding to d1, d2, d3, and d4 in path storages 07. For ease of description, in the following, d1, d2, d3, and d4 are used to represent the foregoing four distance storages 05, and U1, U2, U3, and U4 are used to represent the foregoing four path storages 07.

(2) Expand the current four nodes, where each node corresponds to one path; and perform two-dimensional expansion on each path, thereby obtaining eight potential paths, which are respectively $S_1=\{U_1+1\}$, $S_2=\{U_1-1\}$, $S_3=\{U_2+1\}$, $S_4=\{U_2-1\}$, $S_5=\{U_3+1\}$, $S_6=\{U_3-1\}$, $S_7=\{U_4+1\}$, and $S_8=\{U_4-1\}$. Then, calculate smaller measures corresponding

$$d_i' \Box \left\| y(3) - \sum_{k=0}^{Min(n,K-1)} S_i(k)H(k) \right\|^2 + d_{prev} \quad i=1,2,\ldots,8$$

to the potential paths: , where $d_{prev}$ represents a cumulative measure corresponding to a node before the expansion.

(3) Sort $d_i'$; retain the smaller four path transient distances; update the four path transient distances to the distance storages $d_1$, $d_2$, $d_3$, and $d_4$; and update paths $S_i$ corresponding to the four path transient distances to the path storages $U_1$, $U_2$, $U_3$, and $U_4$, where in this case, only four nodes are reached in the trellis, which are also corresponding to four paths.

(4) Repeat steps (2) and (3) to expand the current four nodes, where each node corresponds to one path; and perform two-dimensional expansion on each path, thereby obtaining eight potential paths, which are respectively $S_1=\{U_1+1\}$, $S_2=\{U_1-1\}$, $S_3=\{U_2+1\}$, $S_4=\{U_2-1\}$, $S_5=\{U_3+1\}$, $S_6=\{U_3-1\}$, $S_7=\{U_4+1\}$, and $S_8=\{U_4-1\}$. Then calculate

$$d_i' \Box \left\| y(3) - \sum_{k=0}^{Min(n,K-1)} S_i(k)H(k) \right\|^2 + d_{prev} \quad i=1,2,\ldots,8$$

smaller measures corresponding to the paths:
where $d_{prev}$ represents a cumulative measure corresponding to a node before the expansion.

(5) Sort $d_i'$; retain the smaller four path measures; update the four path measures to the distance storages $d_1$, $d_2$, $d_3$, and $d_4$; and update paths $S_i$ corresponding to the four path measures to the path storages $U_1$, $U_2$, $U_3$, and $U_4$, where in this case, only four nodes are reached in the trellis, which are also corresponding to four paths.

(6) After the last symbol is calculated, the path storages $U_1$, $U_2$, $U_3$, and $U_4$ and the distance storages $d_1$, $d_2$, $d_3$, and $d_4$ respectively store four paths and smaller measures corresponding to the four paths, and a path corresponding to the shortest distance is the final decoding result.

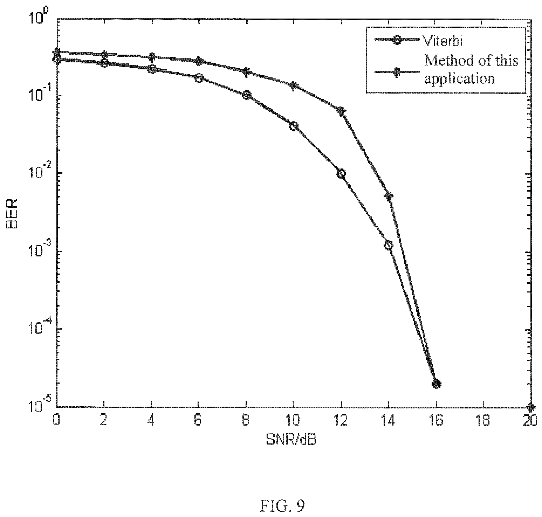

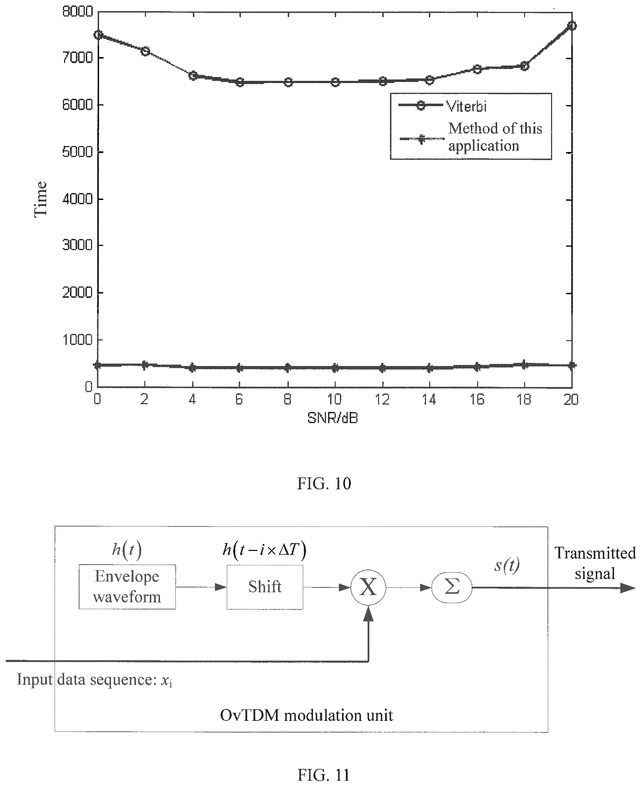

FIG. 9 and FIG. 10 respectively show performance comparison and computation time comparison between the fast decoding method of this example and the existing Viterbi decoding method. It can be obviously seen from the figures that the performance loss of the fast decoding method in this example is less than 1 dB, but the time is greatly reduced. That is, this method can greatly reduce decoding complexity and improve decoding efficiency while ensuring decoding performance.

**Embodiment 2**

This embodiment may use an OvTDM system as an example for description.

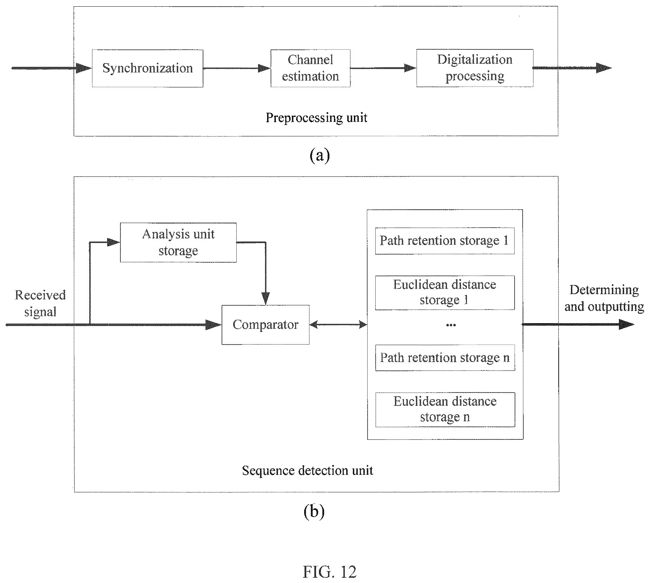

FIG. 11 shows a transmit end of an OvTDM system. An initial envelope waveform in time domain is first generated based on a design parameter; the foregoing initial envelope waveform is shifted in time domain according to a predetermined time interval based on a number of times of overlapped multiplexing, to obtain an offset envelope waveform of each moment; an input data sequence is multiplied by the offset envelope waveform of each moment, to obtain a modulated envelope waveform of each moment; and then the modulated envelope waveforms of the moments are superimposed in time domain, to obtain a complex modulated envelope waveform in time domain for transmission, where the time interval is $\Delta t$, $\Delta t = T/K$, T is a time-domain width of the initial envelope waveform, and K is the number of times of overlapped multiplexing. FIG. 12 shows a receive end of the OvTDM system. The receive end forms a received digital signal sequence for a received signal in each frame and then detects the received digital signal sequence that is formed, to obtain a result of determining modulated data that is modulated to all symbols within a length of the frame.

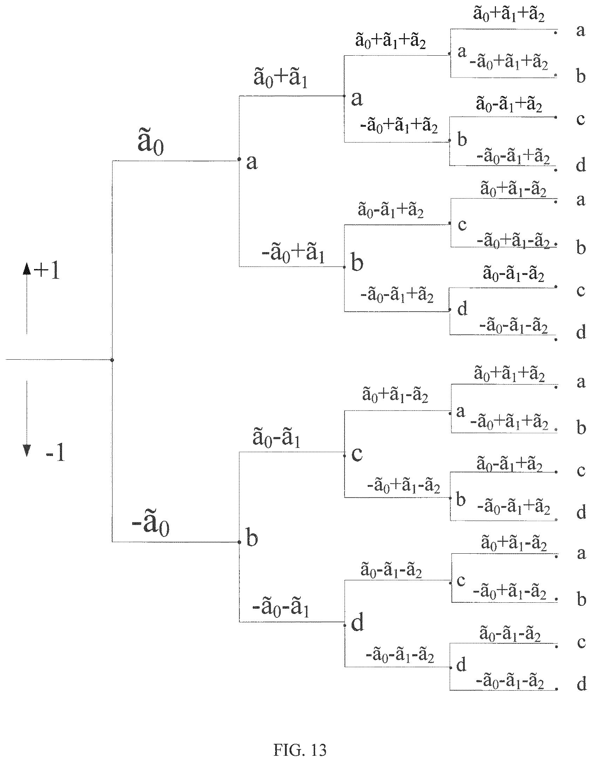

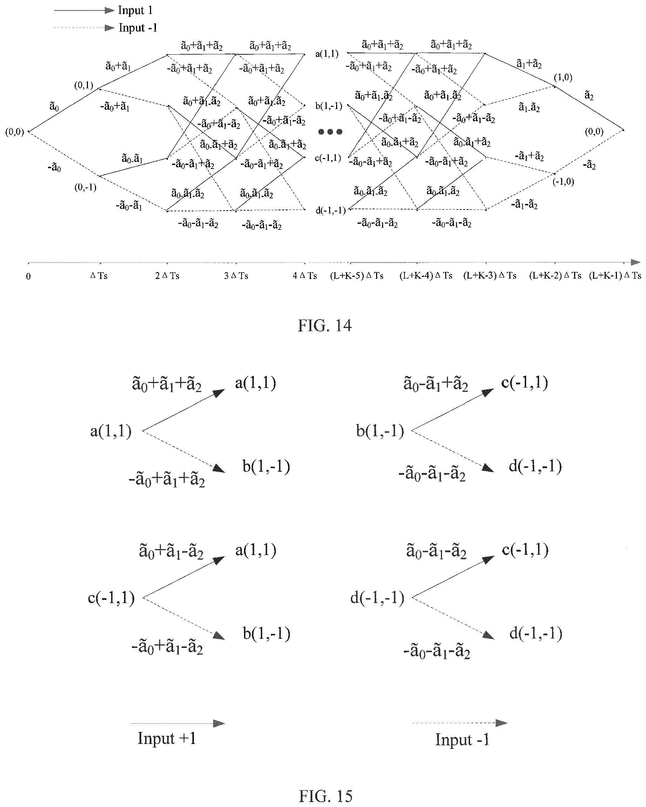

In a two-dimensionally modulated OvTDM system with K times of overlapping, a quantity of nodes in a trellis of the system is $2^{K-1}$. In a conventional decoding algorithm, $2^{K-1}$ distance storages are needed, and $2^{K-1}$ path storages are also needed. As shown in FIG. 13, FIG. 13 shows a diagram of a code tree of a system in which a received signal length N = 4 and the number of times of overlapping K = 3. It can be seen from the figure that in the diagram of the code tree, a state quantity is $2^{K-1}$ = 4. Correspondingly, as shown in FIG. 14, a quantity of nodes in a corresponding trellis is also 4. When a decoding state is fully expanded, each decoding step has a total of eight paths. In this embodiment, $R_n$ distance storages 05 are selected, and $R_n$ path storages 07 are also selected, where $R_n$ is less than $2^{K-1}$, to reduce decoding complexity. In an embodiment, it is assumed that r is obtained by rounding down a value of $\log_2 R_n$. The following describes the decoding steps in detail.

(1) A symbol sequence at a length of $r$ is represented as $\tilde{a}_0, \tilde{a}_1, ..., \tilde{a}_{r-1}$. In two-dimensional modulation, there are $2^r$ possible information combinations. A form of combination is $\pm\tilde{a}_0\pm\tilde{a}_1...\pm\tilde{a}_{r-1}$. Therefore, a matrix of $2^r*r$ dimensions is represented as $msg(2^r*r)$, in which each row represents a symbol sequence at a length of $r$. Separately calculate transient measures between each symbol sequence and the first $r$ received symbols, and define the transient

$$d_{r,i} \square \left\| \mathbf{v}_r - \sum_{k=0}^{r} \hat{u}_{i,r-k}\mathbf{x}_{r,k} \right\|^2, \quad i = 0,1,2,...$$

measures as , where $\mathbf{V}_r$ is the first $r$ received symbols, $\mathbf{x}_{r,k}$ is a window function of OvTDM, and $\hat{u}_{i,r-k}$ is the $(r-k)^{th}$ symbol in the $i^{th}$ row in $msg(2^r*r)$. In this case, when decoding hits the $r^{th}$ node, a corresponding transient measure is $d_{r,i}$, the corresponding 2r decoding paths are symbols in the $i^{th}$ row of $msg(2^r*r)$, and the transient measures and the paths are respectively stored in the distance storages 05 and the path storages 07.

(2) Expand $2^r$ nodes, where two-dimensional expansion can be performed simultaneously on each node. When an input is +1, upward expansion is performed; and when an input is -1, downward expansion is performed. As shown in FIG. 15, a transient measure of an node being expanded is calculated:

$$d_{r+1,i} \square \left\| \mathbf{v}_{r+1} - \sum_{k=0}^{\min(r+1,R_n)} \hat{u}_{i,r+1-k}\mathbf{x}_{r+1,k} \right\|^2, \quad n = 0,1,2,...$$

, and the transient measure is added to a cumulative measure of a previous moment of the path, to obtain measures of $2^{r+1}$ paths.

(3) Sort the measures of the $2^{r+1}$ paths, retain the first $R_n$ nodes having smaller path measures and paths of the $R_n$ nodes, and discard the remaining several nodes having greater measures.

(4) Continue to perform two-dimensional expansion on the $R_n$ nodes, calculate a transient measure of an expansion-hit node, and add the transient measure to a cumulative measure of a previous moment of the node. Regardless whether a trellis is completely unfolded, only the first $R_n$ hit nodes and path measures of the nodes are retained starting from the $n^{th}$ step, and paths with greater measures and distances of the paths are all discarded. Each time, $R_n$ remaining nodes are expanded, and so on, until the end of the data frames of the trellis.

It can be seen from the foregoing steps that by using the fast decoding method proposed in this application, only $R_n$ nodes need to be expanded each time, but in a conventional method, $2^{K-1}$ nodes need to be expanded. In an embodiment, when K is relatively large, a value of $R_n$ may be relatively small and meets $R_n<2^{K-1}$. Therefore, for a decoding sequence at a length of N, the decoding complexity is greatly reduced. It should be noted that in this embodiment, for ease of description, the fast decoding method of this application is described by using the two-dimensionally modulated system. Actually, this method is applicable to an M-dimensionally modulated system, where M may be an integer greater than or equal to 2.

The following uses an actual example to describe this embodiment.

A two-dimensionally modulated OvTDM system with a number of times of overlapping of K=5 is used as an example. The OvTDM system uses a rectangular multiplexing window H = {1 1 1 1 1} for modulation. It should be noted that the fast decoding method according to this application is applicable to various multiplexing window functions. Therefore, when a trellis is completely unfolded, there is a total of $2^{K-1}$=16 nodes. In this example, $R_n$=4. Therefore, r is obtained by rounding down a value of $\log_2 R_n$, that is, 2. It should be noted that in the fast decoding method according to this application, the decoding complexity can be reduced provided that the value of $R_n$ is less than $2^{K-1}$.

It is assumed that a transmitted code sequence is $x_i$={+1 +1 -1 +1 -1 +1 +1 +1 -1 +1}, and a received sequence obtained through modulation in the OvTDM system is $y_i$={+1 +2 +1 +2 +1 +1 +1 +3 +1 +3}.

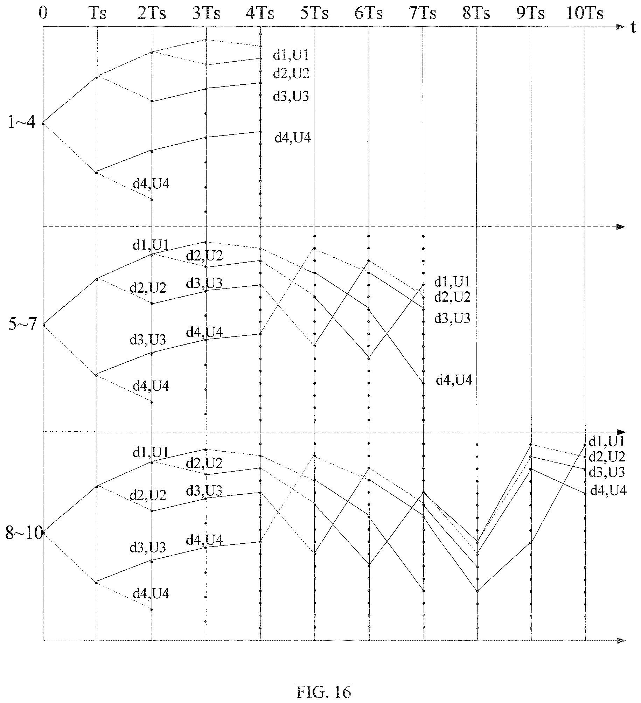

As shown in FIG. 16, the used fast decoding method according to this application is as follows:

(1) Because r=2, first calculate sequence combinations that can be obtained by combining two symbols, where the sequence combinations are separately $U_1$={+1 +1}, $U_2$={+1 -1}, $U_3$={-1 +1}, and $U_4$={-1 -1}. Separately calculate measures between the first two symbols {yi(1) yi(2)} of the received sequence and U1, U2, U3, and U4, to obtain dl, d2, d3, and d4. Store d1, d2, d3, and d4 in distance storages 05; and at the same time, store the paths U1, U2, U3, and U4 corresponding to d1, d2, d3, and d4 in path storages 07. For ease of description, in the following, d1, d2, d3, and d4 are used to represent the foregoing four distance storages 05, and U1, U2, U3, and U4 are used to represent the foregoing four path storages 07.

(2) Expand the current four nodes, where each node corresponds to one path; and perform two-dimensional expansion on each path, thereby obtaining eight potential paths, which are respectively $S_1$={$U_1$ +1}, $S_2$={$U_1$ -1}, $S_3$={$U_2$

+1}, $S_4$={$U_2$ -1}, $S_5$={$U_3$ +1}, $S_6$={$U_3$ -1}, $S_7$={$U_4$ +1}, and $S_8$={$U_4$ -1}. Then, calculate smaller measures corresponding

$$d_i' \square \left\| y(3) - \sum_{k=0}^{Min(n,K-1)} S_i(k)H(k) \right\|^2 + d_{prev} \quad i = 1, 2, \ldots, 8$$

to the potential paths:          where $d_{prev}$ represents a cumulative measure corresponding to a node before the expansion.

(3) Sort $d_i'$; retain the smaller four path transient distances; update the four path transient distances to the distance storages $d_1$, $d_2$, $d_3$, and $d_4$; and update paths $S_i$ corresponding to the four path transient distances to the path storages $U_1$, $U_2$, $U_3$, and $U_4$, where in this case, only four nodes are reached in the trellis, which are also corresponding to four paths.

(4) Repeat steps (2) and (3) to expand the current four nodes, where each node corresponds to one path; and perform two-dimensional expansion on each path, thereby obtaining eight potential paths, which are respectively $S_1$={$U_1$ +1}, $S_2$={$U_1$ -1}, $S_3$={$U_2$ +1}, $S_4$={$U_2$ -1}, $S_5$={$U_3$ +1}, $S_6$={$U_3$ -1}, $S_7$={$U_4$ +1}, and $S_8$={$U_4$ -1}. Then calculate

$$d_i' \square \left\| y(3) - \sum_{k=0}^{Min(n,K-1)} S_i(k)H(k) \right\|^2 + d_{prev} \quad i = 1, 2, \ldots, 8$$

smaller measures corresponding to the paths:

where $d_{prev}$ represents a cumulative measure corresponding to a node before the expansion.

(5) Sort $d_i'$; retain the smaller four path measures; update the four path measures to the distance storages $d_1$, $d_2$, $d_3$, and $d_4$; and update paths $S_i$ corresponding to the four path measures to the path storages $U_1$, $U_2$, $U_3$, and $U_4$, where in this case, only four nodes are reached in the trellis, which are also corresponding to four paths.

(6) After the last symbol is calculated, the path storages $U_1$, $U_2$, $U_3$, and $U_4$ and the distance storages $d_1$, $d_2$, $d_3$, and $d_4$ respectively store four paths and smaller measures corresponding to the four paths, and a path corresponding to the shortest distance is the final decoding result.

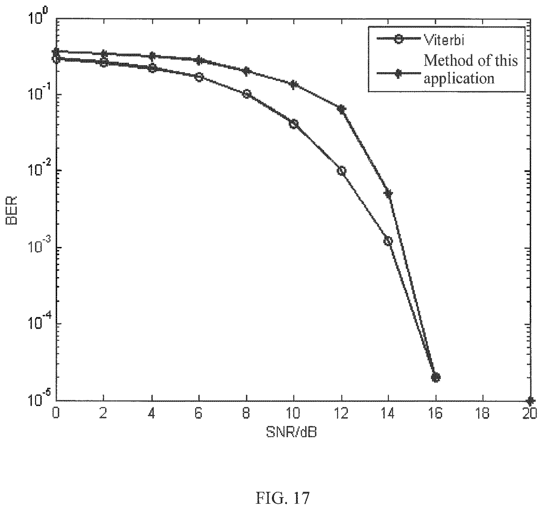

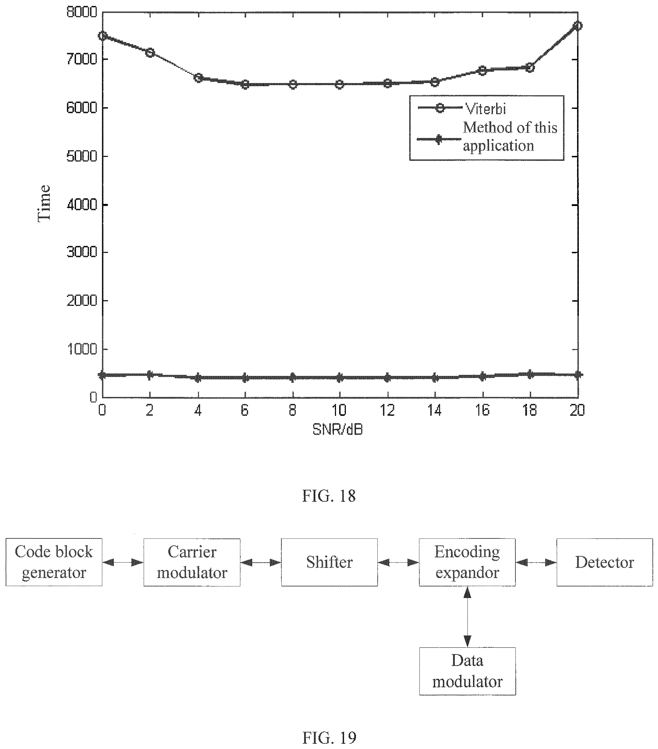

FIG. 17 and FIG. 18 respectively show performance comparison and computation time comparison between the fast decoding method of this example and the existing Viterbi decoding method, where the performance and computation time are results of 10,000 Monte Carlo simulations on a computer. It can be obviously seen from the figures that the performance loss of the fast decoding method in this example is less than 1 dB, but removal time is greatly reduced. That is, this method can greatly reduce decoding complexity and improve decoding efficiency while ensuring decoding performance.

**Embodiment 3**

This embodiment may use an OvCDM system as an example for description.

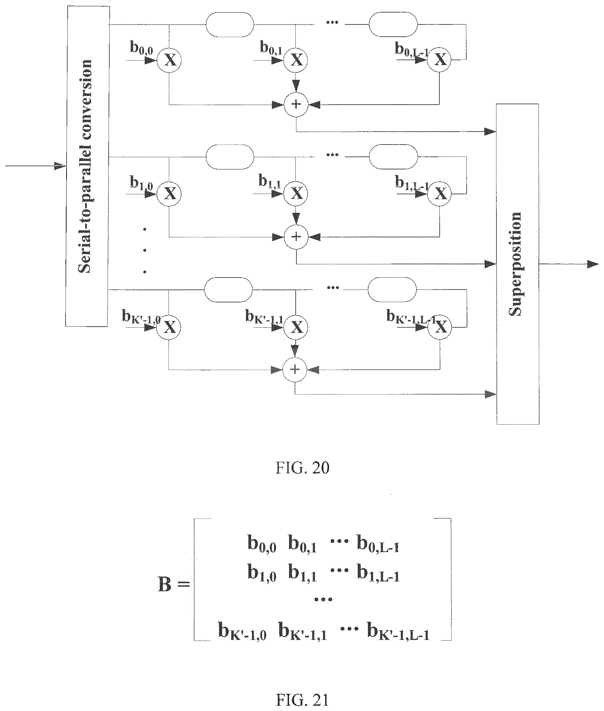

The core of overlapped code division multiplexing of the OvCDM system is overlapping and multiplexing, and a purpose is to improve spectral efficiency of the communications system. In the OvCDM system, a convolutional encoding coefficient is applicable to a generalized convolutional encoding model in the complex number field, and a constraint relationship is generated through symbol overlapping. Main parameters includes an encoding tributary quantity K' and an encoding constraint length L. A system structural diagram thereof is shown in FIG. 19, and a corresponding encoder structure is shown in FIG. 20. The key to the OvCDM system is an encoding matrix, that is, a convolutional expansion coefficient, which needs to meet the linear relationship. In this case, an input sequence and an output sequence are in a one-to-one correspondence. Therefore theoretically, error-free decoding is feasible. Usually, a computer is used to obtain, through searching, all the matrices having greater measures; and the matrices are used as encoding matrices. An encoding matrix arrangement thereof is shown in FIG. 21.

To describe the fast decoding method of this embodiment, an encoding process of the OvCDM system is first provided.

(1) Convert to-be-transmitted data into K' sub data flows through serial-to-parallel conversion, where a data flow on the ith channel is denoted as $u_i = u_{i,0}u_{i,1}u_{i,2}$ .... For example, when K'=2, $u_0 = u_{0,0}u_{0,1}u_{0,2}$ ..., and $u_1 = u_{1,0}u_{1,1}u_{1,2}$ ....

(2) Send each channel of data to a shift register for weighted superposition, where a weighting coefficient of the ith channel is $b_i = b_{i,0}b_{i,1}b_{i,2}$ ..., which is a complex vector.

$$c = \sum_i u_i * b_i$$

(3) Add signals for transmission, to obtain a final output of an OvCDM encoder: c=$c_0c_1c_2$ ..., where     .

$$r_{OVCDM} = \frac{kn}{n+l-1}$$

A bit rate of OvCDM is $r_{OVCDM} = \frac{kn}{n+l-1}$, where n is a length of a sub data flow. When n is long enough, a bit rate loss caused by a hangover of the shift register may be ignored. Therefore, $r_{OVCDM} \approx k$.

A bit rate of a conventional binary-field convolutional encoding model is generally less than 1, compromising the spectral efficiency. However, a bit rate of convolutional encoding in the complex number field of OvCDM is equal to 1, and single-channel convolutional encoding expansion does not compromise the spectral efficiency and can bring about extra encoding gains.

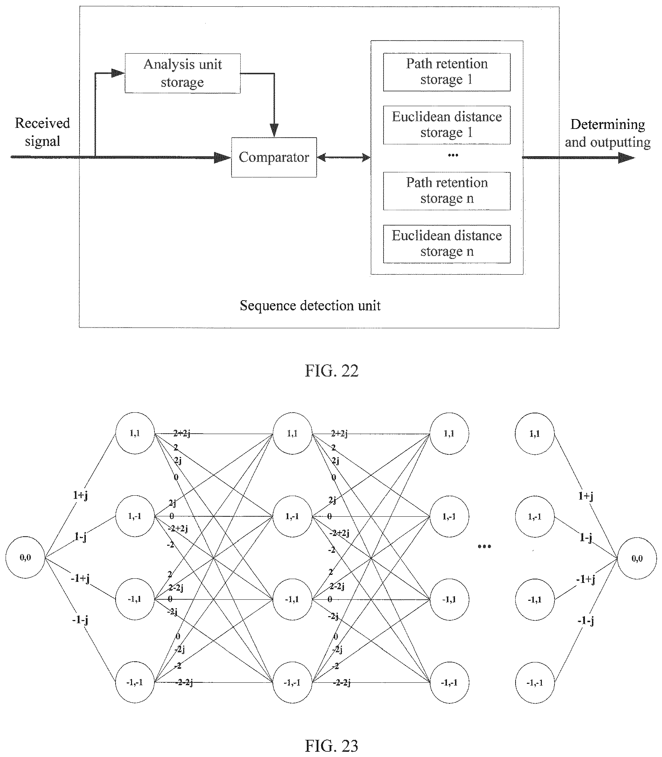

After receiving a signal, a receive end first performs synchronization, channel estimation, and digitalization processing on the signal, and then perform fast decoding on the processed data. The core of a decoding algorithm is to calculate a measure between a received signal and an ideal state, and determine an optional decoding path by using a path storage and the measure, to obtain a final detection sequence. A block diagram of a sequence detection process is shown in FIG. 22.

This embodiment describes a fast decoding method suitable for an OvCDM system. The specific steps are as follows.

It is assumed that in the OvCDM system, an encoding tributary quantity is K', an encoding constraint length is L, a dimension of an encoding output vector is N, and two-dimensional modulation is used, where code elements are +1 and -1.

(1) Initial state:

It is assumed that a path measure $d_{0,0}=0$ at the initial state, that is, $l = 0$.

(2) Calculate a measure of a node:

Each node includes a total of S states, and a measure of the $l^{th}$ node is calculated. A method is to calculate measures $d_{s,m}(l,l+1)$ between all m ideal signal waveforms and received signal sequences $\tilde{v}_l(t)$, where the ideal signal waveforms have transferred from the previous state to the current state, and an expression thereof is

$$d_{s,m}(l,l+1) \approx \int_{l\Delta T_s}^{(l+1)\Delta T_s} \left| \tilde{V}_{n,l}(t) - \tilde{S}_{l,s,m}(t) \right|^2 dt .$$

(3) Calculate a cumulative measure:

Add the measures $d_{s,m}(l,l+1)$ of the states S of the current node to measures $d_{s',l-1}$ of respective starting states S' of the states S, to obtain new cumulative measures of m paths.

(4) Select paths:

Sort the path measures, select $R_n$ paths with smaller path measures, and store the corresponding paths in path storages and store the measures in distance storages, where other paths are discarded, and the retained paths are expanded in the next stage.

(5) Determine the final path:

Repeat steps (2) to (4) until the decoding ends, where in this case, the storages store $R_n$ paths and path smaller measures corresponding to the $R_n$ paths, and the path having the smallest measure is the decoding result.

The follows uses another instance for description.

This case describes a decoding process of the OvCDM system by using an example in which an input data flow is $u = \{+1, -1, -1, -1, -1, +1, -1, +1, +1, -1, +1, -1, -1, -1, -1, +1\}$, K'=2, L=2, and an encoding matrix is $B = \begin{bmatrix} 1 & j \\ j & 1 \end{bmatrix}$. A trellis corresponding to the OvCDM system corresponding to such parameter design is shown in FIG. 23.

(1) Encoding process

First, convert an input data flow $u$ into two flows for K'=2, where correspondingly:

$u_1$ = {+1, -1, -1, -1, +1, +1, -1, -1}
$u_2$ = {-1, -1, +1, +1, -1, -1, -1, +1}.

A convolutional coefficient of each flow is represented as $b_0$ = [1 $j$], $b_1$ = [$j$ 1]. Refer to the encoding structure in FIG. 20 and the trellis in FIG. 23, an encoding output is $c$ = {1-$j$,-2,-2,0,2-2$j$,0,-2,-2}. The encoding implementation process of the OvCDM system may also use other forms. The inventive point of this application lies in the decoding process rather than the encoding process.

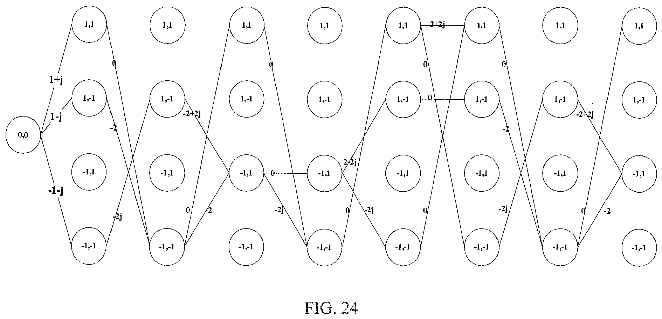

(2) Decoding process, shown in FIG. 24:

A receive end obtains a signal sequence after signal synchronization, channel estimation, and digitalization processing. For ease of description, a state is assumed to be an ideal state. In this case, a received signal sequence is $c$ = {1-$j$,-2,-2,0,2-2$j$,0,-2,-2}, and the received signal is decoded:
The first symbol received is 1-j, and measures between the first symbol and four ideal states (1,1), (1,-1), (-1,1), and (-1,-1) are separately calculated. In this case, paths corresponds the first three smaller measures are (1,-1), (1,1), and (-1,-1) in an ascending order. The corresponding first three smaller measures and paths corresponding to the measures are respectively stored in distance storages 05 and path storages 07.
Then, the second symbol -2 is processed. States corresponding to the currently stored paths are respectively (1,-1), (1,1), and (-1,-1). Each state is expanded, where four-dimensional expansion can be performed on each state. Therefore, 12 paths are obtained. A measure between each path and the currently received symbol is calculated, and the measures of the 12 paths are sorted. The first three smaller measures are retained, and the storages are updated by storing the measures and corresponding paths respectively in the distance storages 05 and the path storages 07.
Subsequent symbols are processed by using the same method: 12 measures are obtained by calculating the cumulative measures, and three paths with smallest measures and the smaller measures corresponding to the paths are retained. After the last symbol is calculated, three paths and path smaller measures corresponding to the paths are obtained. A sequence corresponding to the path having the smallest measure is the final decoding output sequence, which is (1,-1,-1,-1,-1,1,-1,1,1,-1,1,-1,-1,-1,-1,1). The decoding ends.
In Embodiment 1 to Embodiment 3 above, when each time stored paths are expanded, a solution in which the last node of each stored path is expanded is used. In the embodiments below, only a currently stored path corresponding to the smallest measure is expanded.

## Embodiment 4

Using an OvFDM system as an example, for a two-dimensionally modulated OvFDM system, that is, M=2, whose number K of times of overlapping is 2, a quantity of nodes in a trellis of the system is $2^{K-1}$. In a conventional decoding algorithm, $2^{K-1}$ distance storage are needed, and $2^{K-1}$ path storages are also needed. In this embodiment, low overlapping of K=3 is used for description.

(1) Determine paths of the first r symbols and corresponding measures.

A symbol sequence at a length of r is represented as $\tilde{a}_0, \tilde{a}_1, ..., \tilde{a}_{r-1}$. In two-dimensional modulation, there are $2^r$ possible information combinations. A form of combination is $\pm\tilde{a}_0 \pm \tilde{a}_1...\pm\tilde{a}_{r-1}$. Therefore, a matrix of $2^{r*}r$ dimensions is represented as $msg(2^{r*}r)$, in which each row represents a symbol sequence at a length of r. Separately calculate transient measures between each symbol sequence and the first r received symbols, and define the transient measures

$$d_{r,i} \,\Box\, \left\| \mathbf{v}_r - \sum_{j=0}^{r} \hat{u}_{i,r-j} \mathbf{x}_{r,j} \right\|^2, \quad i = 1, 2, ... 2^r$$

as , where $\mathbf{v}_r$ is the first $r$ received symbols, $\mathbf{x}_{r,j}$ is a window function of the OvFDM system, and $\hat{u}_{i,r-j}$ is the (r-j)$^{th}$ symbol in the i$^{th}$ row in $msg(2^{*}r)$. In this case, when decoding hits the r$^{th}$ node, $2^r$ decoding paths U and $2^r$ transient measures d are included, and a node depth of each decoding path is r. The transient measures and the corresponding decoding paths are respectively stored in distance storages 05 and path storages 07.

(2) Find the smallest measure and the greatest measure.

Sort in sequence the $2^r$ transient measures obtained in step (1), and separately find indexes $idx_{min}$ and $idx_{max}$ corresponding to the smallest measure and the greatest measure, where a transient measure corresponding to the index of the smallest measure is $d_{r,idx_{min}}$. Add 1 to a node depth of the index corresponding to the smallest measure, so that the node depth changes to r+1.

(3) Expand a node.

Expand a decoding path corresponding to the index of the smallest measure, where the decoding path can be expanded into two tributaries 1 and -1, that is, the decoding path changes to $[U_{idx_{min}}1]$ and $[U_{idx_{min}}-1]$. After the expansion, there is a total of $2^r+1$ decoding paths, but only $2^r$ paths need to be retained. Therefore, delete a decoding path corresponding to the index of the greatest measure found in step (2), store the decoding tributary $[U_{idx_{min}}1]$ that is expanded into 1 (which may also be replaced by the decoding tributary $[U_{idx_{min}}-1]$ that is expanded into -1) in a storage whose index is $idx_{max}$, and continue to store the -1 tributary $[U_{idx_{min}}-1]$ in a storage whose index is $idx_{min}$. In this case, of the decoding paths, only node depths corresponding to indexes $idx_{min}$ and $idx_{max}$ are r+1, and node depths of other indexes are still r.

(4) Calculate a cumulative measure.

Separately calculate transient measures between the two expanded paths and a received symbol, where a calculation algorithm is the same as that in step (2), and obtained measures of the two paths are respectively $d'_{r+1}$ and $d''_{r+1}$ ; and separately add the measures to transient measures corresponding to r nodes, to obtain cumulative measures. In an addition process, a weight factor alpha may be introduced, and a value is a number greater than 0 and less than or equal to 1. A specific value depends on a system requirement. A purpose thereof is to gradually weaken reference to a measure of a node that is relatively far away from the current node as a node depth increases. An addition process may be represented as $d'_{r-1} + alpha * d_{r,idx_{min}}$ and $d''_{r+1} + alpha * d_{r,idx_{min}}$. Obtained cumulative measures are respectively stored in corresponding storages $idx_{min}$ and $idx_{max}$ in step (3).

Remaining symbol sequences are also selected and expanded by using the manners in the foregoing steps (2) to (4), until a node depth reaches a symbol sequence depth N, and compare transient measures obtained after the last symbol expansion, where the smallest transient measure is the final output decoding path.

It can be seen from the foregoing steps that by using the fast decoding method proposed in this application, only $R_n$ nodes need to be expanded each time, but in a typical method, $2^{K-1}$ nodes need to be expanded. When K is relatively large, a value of $R_n$ may be relatively small and meets $R_n < 2^{K-1}$. Therefore, for a decoding sequence at a length of N, the decoding complexity is greatly reduced.

**Embodiment 5**

This embodiment uses an OvTDM system as an example for description. For a two-dimensionally modulated OvTDM system, there are only two hit nodes starting from the origin of a trellis, regardless of a number K of times of overlapping. Transient measures of tributaries to these two paths are separately calculated, the smallest measure of the transient path measures of the two hit nodes is selected for example, separately calculate transient measures of two expanded tributaries, and record the two hit nodes. At most $R_n$ hit nodes and path transient measures thereof are retained for each moment, and each time only a node with the smallest transient path measure is expanded, so that one hit node is added in each expansion, and paths with relatively large transient path measures and measures thereof are all discarded. The foregoing steps are repeated until the end of data frames of the trellis, and a path of a hit node with the smallest transient path measure is determined as the output. The following describes the decoding steps in detail. In this embodiment, it may be assumed that $R_n = 2^r$.

(1) Determine paths of the first r symbols and corresponding measures.

A symbol sequence at a length of r is represented as $\tilde{a}_0, \tilde{a}_1, ..., \tilde{a}_{r-1}$. In two-dimensional modulation, there are $2^r$ possible information combinations. A form of combination is $\pm\tilde{a}_0 \pm \tilde{a}_1...\pm \tilde{a}_{r-1}$. Therefore, a matrix of $2^{r*}r$ dimensions is represented as $msg(2^r * r)$, in which each row represents a symbol sequence at a length of r. Separately calculate transient measures between each symbol sequence and the first r received symbols, and define the transient measures

$$d_{r,i} \square \left\| \mathbf{v}_r - \sum_{j=0}^{r} \hat{u}_{i,r-j} \mathbf{x}_{r,j} \right\|^2 , \quad i = 1, 2, \ldots 2^r$$

as , where $\mathbf{v}_r$ is the first $r$ received symbols, $\mathbf{x}_{r,j}$ is a window function of the OvTDM system, and $\hat{u}_{i,r-j}$ is the $(r-j)$th symbol in the $i$th row in $msg(2^r * r)$. In this case, when decoding hits the $r$th node, $2^r$ decoding paths U and $2^r$ transient measures d are included, and a node depth of each decoding path is r. The transient measures and the corresponding decoding paths are respectively stored in distance storages 05 and path storages 07.

(2) Find the smallest measure and the greatest measure.

Sort in sequence the $2^r$ transient measures obtained in step (1), and separately find indexes $idx_{min}$ and $idx_{max}$-corresponding to the smallest measure and the greatest measure, where a transient measure corresponding to the index of the smallest measure is $d_{idx_{min}}$. Add 1 to a node depth of the index corresponding to the smallest measure, so that the node depth changes to r+1.

(3) Expand a node.

Expand a decoding path corresponding to the index of the smallest measure, where the decoding path can be expanded into two tributaries 1 and -1, that is, the decoding path changes to [$U_{idx_{min}}$ 1] and [$U_{idx_{min}}$ -1]. After the expansion, there is a total of $2^r+1$ decoding paths, but only $2^r$ paths need to be retained. Therefore, delete a decoding path corresponding to the index of the greatest measure found in step (2), store the decoding tributary [$U_{idx_{min}}$ 1] that is expanded into 1 in a storage whose index is $idx_{max}$ (which may also be replaced by the -1 tributary), and continue to store the -1 tributary [$U_{idx_{min}}$ -1] in a storage whose index is $idx_{min}$. In this case, of the decoding paths, only node depths corresponding to indexes $idx_{min}$ and $idx_{max}$ are r+1, and node depths of other indexes are still r.

(4) Calculate a cumulative measure.

Separately calculate transient measures between the two expanded paths and a received symbol, where a calculation algorithm is the same as that in step (2), and obtained measures of the two paths are respectively $d'_{r+1}$ and $d''_{r+1}$ ; and separately add the measures to transient measures corresponding to r nodes, to obtain cumulative measures. In an addition process, a weight factor alpha may be introduced, and a value is a number between 0 and 1. A specific value depends on a system requirement. A purpose thereof is to gradually weaken reference to a measure of a node that is relatively far away from the current node as a node depth increases. An addition process may be represented as $d'_{r+1}$ + alpha $* d_{r,idx_{min}}$ and $d''_{r+1}$ + alpha $* d_{r,idx_{min}}$. Obtained cumulative measures are respectively stored in corresponding storages $idx_{min}$ and $idx_{max}$ in step (3).

Remaining symbol sequences are also selected and expanded by using the manners in the foregoing steps (2) to (4), until a node depth reaches a symbol sequence depth N, and compare transient measures obtained after the last symbol expansion, where the smallest transient measure is the final output decoding path.

It can be seen from the foregoing steps that by using the fast decoding method proposed in this application, only $R_n$ nodes need to be expanded each time, but in a typical method, $2^{K-1}$ nodes need to be expanded. When K is relatively large, a value of $R_n$ may be relatively small and meets $R_n < 2^{K-1}$. Therefore, for a decoding sequence at a length of N, the decoding complexity is greatly reduced.

**Embodiment 6**

A structure of an OvCDM system is not described herein again. It is assumed that in the OvCDM system, an encoding tributary quantity is K', an encoding constraint length is L, a dimension of an encoding output vector is N, and two-dimensional modulation is used, where code elements are +1 and -1. Because the encoding tributary quantity is K' and the encoding constraint length is L, a quantity m of reachable nodes in each state is $2^{K'}$, and a total of $2^{K'}$ states S are included. Therefore, a total quantity of reachable nodes of all the states is $2^{2K'}$. In this embodiment, $R_n$ distance storages 05 are selected, and $R_n$ path storages 07 are also selected, where $R_n$ is less than $2^{K-1}$, to reduce decoding complexity. In an embodiment, it is assumed that r is obtained by rounding down a value of $\log_2 R_n$.

(1) Initial state:

It is assumed that a path measure $d_{0,0} = 0$ at the initial state ($l = 0$).

(2) Determine paths of the first r symbols and corresponding measures.

A symbol sequence at a length of r is represented as $\tilde{a}_0, \tilde{a}_1, ..., \tilde{a}_{r-1}$. In two-dimensional modulation, there are $2^r$ possible information combinations. A form of combination is $\pm \tilde{a}_0 \pm \tilde{a}_1 ... \pm \tilde{a}_{r-1}$. Therefore, a matrix of $2^r * r$ dimensions is represented as $msg(2^r * r)$, in which each row represents a symbol sequence at a length of r. Separately calculate transient measures between each symbol sequence and the first r received symbols, and define the transient measures

as $l_{r,i} \Box \left\| \mathbf{v}_r - \sum_{i=0}^{r} \hat{u}_{i,r-j} \mathbf{x}_{r,j} \right\|^2, \quad i = 1, 2, ... 2^r$ where $\mathbf{v}_r$ is the first $r$ received symbols, $\mathbf{x}_{r,j}$ is an encoding matrix of OvCDM, and $\hat{u}_{i,r-j}$ is the (r-j)$^{th}$ symbol in the i$^{th}$ row in $msg(2^r * r)$. In this case, when decoding hits the r$^{th}$ node, $2^r$ decoding paths U and $2^r$ transient measures d are included, and a node depth of each decoding path is r. The transient measures and the corresponding decoding paths are respectively stored in distance storages 05 and path storages 07.

(3) Calculate a measure of a node:

Each node includes a total of S states, and a measure of the $l^{th}$ node is calculated. A method is to calculate measures $d_{s,m}(l,l+1)$ between all m ideal signal waveforms and received signal sequences $\tilde{v}_l(t)$ $d_{s,m}(l,l+1)$, where the ideal signal waveforms have transferred from the previous state to the current state, and an expression thereof is

$$d_{s,m}(l,l+1) \Box \int_{l\Delta T_s}^{(l+1)\Delta T_s} \left| \tilde{V}_{n,l}(t) - \tilde{S}_{l,s,m}(t) \right|^2 dt.$$

(4) Calculate a cumulative measure:

Add Euclidean distances $d_{s,m}(l,l+1)$ of the states $s$ of the current node to measures $d_{s',l-1}$ of respective starting states S' of the states S, to obtain new cumulative Euclidean distances of m paths. In an addition process, a weight factor alpha may be introduced, and a value is a number between 0 and 1. A specific value depends on a system requirement. A purpose thereof is to gradually weaken reference to a measure of a node that is relatively far away from the current node as a node depth increases.

(5) Select paths:

Sort the cumulative Euclidean distance, and select a path having the smallest cumulative Euclidean distance for expansion, where m tributaries can be obtained through expansion. Calculate a measure of a current node for the m tributaries in sequence, retain the path having the smallest measure, and also discard other (m-1) paths. In this case, the storages include a total of $R_n$ paths and smaller measures corresponding to the paths.

(6) Determine the final path:

Repeat steps (3) to (5) until the decoding ends, where in this case, the storages store $R_n$ paths and Euclidean distances corresponding to the $R_n$ paths, and the path having the smallest Euclidean distance is the decoding result.

In this embodiment, a quantity $R_n$ of retained paths determines information retained in the decoding process. For an OvCDM system whose encoding tributary quantity is K', a quantity of discarded paths is $2^{2K'}-R_n$. Therefore, the decoding complexity decreases as $R_n$ reduces. However, $R_n$ cannot be infinitely small because decoding performance is compromised more severely as $R_n$ decreases and a higher signal-to-noise ratio is needed under the same bit error rate condition. Therefore, a proper $R_n$ needs to be selected based on an actual system and channel, to reduce the decoding complexity while minimizing the decoding performance loss. Generally, a selected value of $R_n$ is greater than $2^{L(K'-4)}$ or equal to and is less than or equal to $2^{L(K'-2)}$. In which case, the decoding performance can be guaranteed while greatly reducing the decoding complexity.

In addition to an OvXDM system, the fast decoding method and device proposed in this application may also be widely applicable to actual mobile communications systems, for example, TD-LTE and TD-SCDMA systems, and may further be widely applicable to any wireless communications systems such as satellite communication, microwave line-of-sight communication, dispersion communication, atmospheric light communication, infrared communication, and aquatic communication. The fast decoding method and device according to this application may be applied both large-capacity wireless transmission and small-capacity light-weight radio systems.

By using the fast decoding method proposed in this patent, a to-be-expanded is selected during path expansion in decoding. A correct path must be one of the several preferable paths; therefore, only nodes having preferable paths need to be selected for expansion, and nodes with inferior paths are discarded and no longer expanded subsequently, thereby reducing the decoding complexity and improving the decoding efficiency of the system.

The foregoing contents are further detailed descriptions of this application in combination with specific implementation, and it cannot be construed that specific implementations of this application is only restricted to these descriptions. Persons with ordinary skills in the art may still make several simple deductions or replacements without departing from the inventive concepts of this application.

**Claims**

1. A fast decoding method suitable for an OvXDM system, comprising the following steps:

   step 1. separately calculating measures between all potential paths of first r symbols and first r received symbols in a received symbol sequence, wherein r is less than a quantity of all symbols;
   step 2. sorting the calculated measures, and storing smaller $R_n$ measures of the measures and paths respectively corresponding to the $R_n$ measures;
   step 3. expanding the last node of each path currently stored, calculating a transient measure between the expanded path and a corresponding received symbol in the received symbol sequence, and adding each transient measure to a cumulative measure corresponding to a previous moment of the transient measure, to obtain a cumulative measure of each path at the current moment after the addition, wherein the transient measure is:

   $$d_{r,i} \square \left\| \mathbf{v}_r - \sum_{k=0}^{r} \hat{u}_{i,r-k} \mathbf{x}_{r,k} \right\|^2, \quad i = 0,1,2,...$$
   ,

   wherein
   $V_r$ is first $r$ received symbols, $\mathbf{x}_{r,k}$ is a window function, and $\hat{u}_{i,r-k}$ is the (r-k)th symbol in the ith row of $msg(2^r*r)$ ;
   step 4. sorting the cumulative measures of the paths after the addition, and storing smaller $R_n$ measures of the cumulative measures and paths respectively corresponding to the $R_n$ measures;
   step 5. when a node corresponding to the last symbol in the received symbol sequence is expanded in step 3, and correspondingly, in step 4, the smaller $R_n$ measures corresponding to the whole received symbol sequence and paths respectively corresponding to the $R_n$ measures are stored, ending the operation; otherwise, repeating step 3 and step 4; and
   step 6. selecting the path having the smallest measure as a decoding path, to perform determining and outputting, wherein
   $R_n$ is a positive integer and is less than a quantity of nodes in a trellis corresponding to the OvXDM system.

2. The fast decoding method suitable for an OvXDM system according to claim 1, wherein the OvXDM system is an OvTDM system, an OvFDM system, an OvCDM system, an OvSDM system, or an OvHDM system.

3. The fast decoding method suitable for an OvXDM system according to claim 2, wherein when the OvXDM system is an OvTDM system or an OvFDM system, $R_n$ is less than $M^{K-1}$ and is greater than or equal to $M^{K-4}$, wherein K is a number of times of overlapping of a received symbol, and M represents a dimension and a value of M is an integer greater than or equal to 2; or when the OvXDM system is an OvCDM system, $R_n$ is less than $M^{L(K'-4)}$ and is greater than or equal to $M^{L(K'-2)}$, wherein K' is an encoding tributary quantity of the received symbol, and L is an encoding constraint length of the received symbol.

4. The fast decoding method suitable for an OvXDM system according to any one of claims 1 to 3, wherein r is obtained by rounding down a value of $\log_M R_n$, and M represents the dimension and the value of M is an integer greater than or equal to 2.

5. A fast decoding device suitable for an OvXDM system, comprising:

   a first calculation module, configured to separately calculate measures between all potential paths of first r symbols and first r received symbols;

a first sorting module, configured to sort the calculated measures;

$R_n$ distance storages and $R_n$ corresponding path storages, respectively configured to store smaller $R_n$ measures obtained by the first sorting module and paths respectively corresponding to the $R_n$ measures;

an expansion module, configured to perform M-dimensional expansion on the last node of each path currently stored;

a second calculation module, configured to calculate a transient measure between the expanded path and a corresponding received symbol in a received symbol sequence, and add each transient measure to a cumulative measure corresponding to a previous moment of the transient measure, to obtain a cumulative measure of each path at the current moment after the addition, wherein the transient measure is:

$$d_{r,i} \square \left\| \mathbf{v}_r - \sum_{k=0}^{r} \hat{u}_{i,r-k}\mathbf{x}_{r,k} \right\|^2 , \quad i = 0,1,2,...$$

,

wherein

$V_r$ is the first $r$ received symbols, $\mathbf{x}_{r,k}$ is a window function, and $\hat{u}_{i,r-k}$ is the $(r-k)^{th}$ symbol in the $i^{th}$ row of $msg(2^{r*} r)$ ;

a second sorting module, configured to sort the cumulative measures of the paths after the addition obtained by the second calculation module, wherein the smaller $R_n$ measures and paths respectively corresponding to the $R_n$ measures are used to update the values stored in the $R_n$ distance storages and the $R_n$ corresponding path storages; and the expansion module, the second calculation module, and the second sorting module work repeatedly and stop until the expansion module expands the node corresponding to the last symbol in the received symbol sequence so that the $R_n$ distance storages and the $R_n$ corresponding path storages respectively store the smaller $R_n$ measures corresponding to the whole received symbol sequence and paths respectively corresponding to the $R_n$ measures; and

a determining and outputting module, configured to select, as a decoding path, a path stored in a path storage corresponding to a distance storage that stores the smallest measure, to perform determining and outputting, wherein

$R_n$ is a positive integer, is preset as required, and is less than a quantity of nodes in a trellis corresponding to the OvXDM system.

6. The fast decoding device suitable for an OvXDM system according to claim 5, wherein when the OvXDM system is an OvTDM system or an OvFDM system, $R_n$ is less than $M^{K-1}$ and is greater than or equal to $M^{K-4}$, wherein K is a number of times of overlapping of a received symbol, and M represents a dimension and a value of M is an integer greater than or equal to 2.

7. The fast decoding device suitable for an OvXDM system according to claim 5, wherein when the OvXDM system is an OvCDM system, $R_n$ is less than $M^{L(K'-4)}$ and is greater than or equal to $M^{L(K'-2)}$, K' is an encoding tributary quantity of the received symbol, and L is an encoding constraint length of the received symbol.

8. The fast decoding device suitable for an OvXDM system according to any one of claims 5 to 7, wherein r is obtained by rounding down a value of $\log_M R_n$, M represents the dimension, and the value of M is an integer greater than or equal to 2.

9. An OvXDM system, comprising the fast decoding device suitable for an OvXDM system according to any one of claims 5 to 8.

10. The OvXDM system according to claim 9, wherein the OvXDM system is an OvTDM system, an OvFDM system, an OvCDM system, an OvSDM system, or an OvHDM system.

11. A fast decoding method for an OvXDM system, comprising the following steps:

step 1. calculating measures between all potential paths of first r symbols and first r received symbols in a received symbol sequence;

step 2. sorting the calculated measures, and storing smaller $R_n$ measures and paths respectively corresponding to the $R_n$ measures;

step 3. expanding a path corresponding to the smallest measure currently stored, calculating a transient measure between the expanded path and a corresponding received symbol, and adding each transient measure to a cumulative measure corresponding to a previous moment, to obtain a cumulative measure of each expanded path at the current moment after the addition;

step 4. sorting the cumulative measures of the expanded paths and the other unexpanded $R_n$-1 measures that are stored, and storing smaller $R_n$ measures and paths respectively corresponding to the $R_n$ measures; and

step 5. when the path corresponding to the smallest measure currently stored reaches a depth of the received symbol sequence after expansion in step 3, calculating the transient measure between the expanded path and the corresponding received symbol, comparing the transient measures, and using a path corresponding to the smallest transient measure as a decoding path; otherwise, repeating step 3 and step 4, wherein

$R_n$ is a positive integer and is less than a quantity of nodes in a trellis corresponding to the OvXDM system.

12. The fast decoding method for an OvXDM system according to claim 11, wherein when each transient measure is added to the cumulative measure corresponding to the previous moment in step 3, the cumulative measure is first multiplied by a weight factor and then added to the transient measure.

13. The fast decoding method for an OvXDM system according to claim 12, wherein a value of the weight factor is greater than 0 and is less than or equal to 1.

14. The fast decoding method for an OvXDM system according to claim 11, wherein r is obtained by rounding down a value of $\log_M R_n$, M represents a dimension of the system, and a value of M is an integer greater than or equal to 2.

15. A fast decoding device for an OvXDM system, comprising:

a first calculation module, configured to separately calculate measures between all potential paths of first r symbols and first r received symbols in a received symbol sequence;

a first sorting module, configured to sort the calculated measures;

$R_n$ distance storages and $R_n$ corresponding path storages, respectively configured to store smaller $R_n$ measures obtained by the first sorting module and paths respectively corresponding to the $R_n$ measures;

an expansion module, configured to expand a path corresponding to the smallest measure currently stored;

a second calculation module, configured to calculate a transient measure between the path expanded by the expansion module and a corresponding received symbol, and adding each transient measure to a cumulative measure corresponding to a previous moment, to obtain a cumulative measure of each expanded path at the current moment after the addition;

a second sorting module, configured to sort the cumulative measures that are of the expanded paths and that are calculated by the second calculation module and the other unexpanded $R_n$-1 measures that are stored, wherein the smaller $R_n$ measures and paths respectively corresponding to the $R_n$ measures are used to update the values in the $R_n$ distance storages and the $R_n$ corresponding path storages; and

a comparing and outputting module, wherein when the path corresponding to the smallest measure currently stored reaches the depth of the received symbol sequence after being expanded by the expansion module, the second calculation module calculates the transient measure between the path expanded by the expansion module and the corresponding received symbol, and the comparing and outputting module compares the transient measures and uses a path corresponding to the smallest transient measure as a decoding path; otherwise, the expansion module, the second calculation module, and the second sorting module work repeatedly, wherein

$R_n$ is a positive integer and is less than a quantity of nodes in a trellis corresponding to the OvXDM system.

16. The fast decoding device for an OvXDM system according to claim 15, further comprising a weight factor module, configured to: when the second calculation module adds each transient measure to the cumulative measure corresponding to the previous moment, first multiply the cumulative measure of the previous moment by a weight factor, so that the cumulative measure of the previous moment is first multiplied by the weight factor and then added to the transient measure.

17. The fast decoding device for an OvXDM system according to claim 16, wherein a value of the weight factor of the weight factor module is greater than 0 and is less than or equal to 1.

18. The fast decoding method for an OvXDM system according to claim 15, wherein r is obtained by rounding down a value of $\log_M R_n$, M represents a dimension of the system, and a value of M is an integer greater than or equal to 2.

Separately calculate measures between all potential paths of first r symbols and first r received symbols in a received symbol sequence — S01

Sort the measures — S03

Store smaller Rn measures and corresponding paths — S05

Expand each path — S07

Calculate transient measures — S09

Add to a cumulative measure corresponding to a path at a previous moment, to obtain a cumulative measure at the current moment after the addition — S11

Sort the cumulative measures — S13

Store the smaller Rn measures and corresponding paths — S15

Repeat steps S07 to S15, until the last node corresponding to the received symbol is expanded — S17

Select the path having the smallest measure as a decoding path — S19

FIG. 1

| First calculation module 01 | First sorting module 03 | Expansion module 09 |
|---|---|---|
| Second calculation module 11 | Second sorting module 13 | Determining and outputting module 15 |

| Distance storage 05 | | Path storage 07 |
|---|---|---|
| Distance storage 05 | | Path storage 07 |
| • • • | Rn distance storages | • • • |
| Distance storage 05 | | Path storage 07 |

Rn path storages

FIG. 2

$H(f)$  $H(f - i \times \Delta B)$  $S(f)$

| Spectrum signal | → | Spectrum shift | → | $\times$ | → | $\Sigma$ | → | Time domain Inverse Fourier transform | → | Transmitted signal |

Input data sequence: $X_i$

OvFDM modulation unit

FIG. 3

Symbol synchronization unit

Digital processing unit

Block diagram of OvFDM signal receiving

(a)

Received signal

Frequency domain

Fourier transform

Frequency segmentation

Convolutional encoding

Data detection

Determining and outputting

Block diagram of OvFDM received signal detection

(b)

FIG. 4

FIG. 5

FIG. 6

FIG. 7

FIG. 8

FIG. 9

FIG. 10

FIG. 11

Synchronization → Channel estimation → Digitalization processing

Preprocessing unit

(a)

Received signal → Analysis unit storage → Comparator → Path retention storage 1 / Euclidean distance storage 1 / ... / Path retention storage n / Euclidean distance storage n → Determining and outputting

Sequence detection unit

(b)

FIG. 12

FIG. 13

FIG. 14

FIG. 15

FIG. 16

FIG. 17

FIG. 18

FIG. 19

FIG. 20

$$B = \begin{bmatrix} b_{0,0} & b_{0,1} & \cdots & b_{0,L-1} \\ b_{1,0} & b_{1,1} & \cdots & b_{1,L-1} \\ & \cdots & \\ b_{K'-1,0} & b_{K'-1,1} & \cdots & b_{K'-1,L-1} \end{bmatrix}$$

FIG. 21

FIG. 22

FIG. 23

FIG. 24

Separately calculate measures between all potential paths of first r symbols and first r received symbols in a received symbol sequence — S01

Sort the measures — S03

Store smaller Rn measures and corresponding paths — S05

Expand a path corresponding to the smallest measure — S07

Calculate a transient measure of the expanded path — S09

Add to a measure corresponding to a path at a previous moment, to obtain a cumulative measure of the expanded path at the current moment — S11

Sort the cumulative measures of the paths after the Expansion and cumulative measures of the other unexpanded measures that are stored — S13

Store the smaller Rn measures and corresponding paths — S15

When the paths reach a depth of the received symbol sequence after expansion in step 07, calculate transient measures of the expanded paths, compare the transient measures, and use a path corresponding to the smallest measure as a decoding path; otherwise, repeat steps S07 to S15 — S17

FIG. 25

# INTERNATIONAL SEARCH REPORT

| International application No. |
| --- |
| **PCT/CN2017/092067** |

### A. CLASSIFICATION OF SUBJECT MATTER

H04L 1/00 (2006.01) i

According to International Patent Classification (IPC) or to both national classification and IPC

### B. FIELDS SEARCHED

Minimum documentation searched (classification system followed by classification symbols)

H04L; H04W; H04Q; H04B

Documentation searched other than minimum documentation to the extent that such documents are included in the fields searched

Electronic data base consulted during the international search (name of data base and, where practicable, search terms used)

CNPAT, CNKI, WPI, EPODOC: OV?DM, number of times, branch, overlap+, multiplex+, decode, encod+, coding, number, measure, path

### C. DOCUMENTS CONSIDERED TO BE RELEVANT

| Category* | Citation of document, with indication, where appropriate, of the relevant passages | Relevant to claim No. |
| --- | --- | --- |
| A | CN 101510813 A (CHINA MOBILE COMMUNICATIONS CORPORATION), 19 August 2009 (19.08.5009), description, pages 5-6 and 9-10 | 1-18 |
| A | CN 101557364 A (SHANDONG UNIVERSITY), 14 October 2009 (14.10.2009), the whole document | 1-18 |
| A | CN 101632248 A (BEIJING QINGSHEN TECHNOLOGY DEVELOPMENT CENTER CO., LTD.), 20 January 2010 (20.01.2010), the whole document | 1-18 |
| A | CN 102185618 A (HUAWEI TECHNOLOGIES CO., LTD.), 14 September 2011 (14.09.2011), the whole document | 1-18 |
| A | CN 103780349 A (BEIJING UNIVERSITY OF TECHNOLOGY), 07 May 2014 (07.05.2014), the whole document | 1-18 |
| A | US 6912257 B1 (SAMSUNG ELECTRONICS CO., LTD.), 28 June 2005 (28.06.2005), the whole document | 1-18 |

☐ Further documents are listed in the continuation of Box C.    ☒ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 September 2017 (08.09.2017) | **27 September 2017 (27.09.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**GUO, Jing**<br><br>Telephone No.: (86-10) **62413415** |

Form PCT/ISA/210 (second sheet) (July 2009)

## INTERNATIONAL SEARCH REPORT
### Information on patent family members

| | International application No. |
|---|---|
| | **PCT/CN2017/092067** |

| Patent Documents referred in the Report | Publication Date | Patent Family | Publication Date |
|---|---|---|---|
| CN 101510813 A | 19 August 2009 | None | |
| CN 101557364 A | 14 October 2009 | None | |
| CN 101632248 A | 20 January 2010 | WO 2008098417 A1 | 21 August 2008 |
| CN 102185618 A | 14 September 2011 | None | |
| CN 103780349 A | 07 May 2014 | None | |
| US 6912257 B1 | 28 June 2005 | WO 0067386 A1 | 09 November 2000 |
| | | JP 2002543733 A | 17 December 2002 |
| | | EP 1173932 A1 | 23 January 2002 |
| | | AU 4435500 A | 17 November 2000 |
| | | KR 20000067422 A | 15 November 2000 |
| | | RU 2226033 C2 | 20 March 2004 |
| | | BR 0009998 A | 08 January 2002 |
| | | CA 2369313 A1 | 09 November 2000 |
| | | CN 1348635 A | 08 May 2002 |
| | | AU 756612 B | 16 January 2003 |

Form PCT/ISA/210 (patent family annex) (July 2009)